(19) Europäisches Patentamt
European Patent Office
Office européen des brevets

(11) **EP 3 363 858 A1**

(12) **EUROPEAN PATENT APPLICATION**

(43) Date of publication:
**22.08.2018 Bulletin 2018/34**

(51) Int Cl.:
***C08L 23/04*** *(2006.01)*

(21) Application number: **17156970.0**

(22) Date of filing: **20.02.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Trinseo Europe GmbH**
**8810 Horgen (CH)**

(72) Inventors:
• **Lakeman, Pascal**
**4816 AW Breda (NL)**

• **De Winde, Peter**
**4511AR Breskens (NL)**
• **Lazarus, Etienne**
**67500 Marienthal (FR)**
• **Hahn-Behrens, Nathalie**
**67250 Soultz/Sous/Forets (FR)**
• **Salminen, Pekka**
**6403 Kussnacht am Rigi (CH)**

(74) Representative: **Hoffmann Eitle**
**Patent- und Rechtsanwälte PartmbB**
**Arabellastraße 30**
**81925 München (DE)**

(54) **COMPESITIONS OF POLYOLEFIN DISPERSIONS AND LACTICES AND POLYMERIC MIXTURES PREPARED THEREFROM**

(57) The present disclosure relates to compositions containing polyolefin dispersions and lattices containing one or more one or more monomers of styrene, alkadienes, and (meth) acrylates and to polymeric matrices prepared from such compositions. The compositions containing polyolefin dispersions and lattices containing one or more one or more monomers of styrene, alkadienes, and (meth) acrylates may be used to prepare fiber containing concentrates and structures having the polymeric matrices coated on the fibers. The present disclosure also relates to methods of preparing such compositions. The present disclosure also relates to the preparation fiber containing structures having the polymeric matrices coated on the fibers.

EP 3 363 858 A1

## Description

### FIELD

The present disclosure relates to compositions containing polyolefin dispersions and lattices containing one or more one or more monomers of styrene, alkadienes, and (meth) acrylates and to polymeric matrices prepared from such compositions. The compositions containing polyolefin dispersions and lattices containing one or more one or more monomers of styrene, alkadienes, and (meth) acrylates may be used to prepare fiber containing concentrates and structures having the polymeric matrices coated on the fibers. The present disclosure also relates to methods of preparing such compositions. The present disclosure also relates to the preparation fiber containing structures having the polymeric matrices coated on the fibers.

### BACKGROUND

Thermoplastic polymers are utilized to prepare molded parts in a variety of industries, for example automotive, toys, appliances, farm and lawn tractors and implements, medical devices, food service items, electronic equipment components, and the like. Thermoplastic polymers provide significant advantages for molded products, for example lighter weight than some alternative materials, design flexibility, controlled conductivity, and the like. Thermoplastic polymers exhibit flexibility in processing which facili-tates flexibility in design and production of designed products. Thermoplastic polymers are used in some industries to reduce weight in the resulting products, for instance in automobiles. In some applications thermoplastic polymers present challenges, for exam-ple higher coefficient of liner expansion (CLTE), lower modulus, lower strengths, lower conductivity and higher brittleness than alternative materials. Fillers, such as fibers, can be added to improve CLTE, modulus and based on the nature and content of the fibers, conductivity. For this reason many thermoplastic polymers are reinforced with long fibers, for instance long glass fibers, to provide mechanical strength, improved CLTE and heat resistance. Exemplary structures prepared from long glass fiber thermoplastics useful in automobiles include bumper beam carriers, spare wheel wells, door sill panels, battery carriers, front end carriers, acoustic shielding, underbody panels, instrument panel carriers and hatchbacks.

Processes for preparing long fiber reinforced thermoplastics are known in the art. In some processes long fiber strands are drawn through a melt of thermoplastic polymers to wet the fibers with the thermoplastic resin. The problem with these processes is that the fiber levels are lower than desired for some applications or processes used to manufacture articles. Processes for preparing fiber reinforced thermoplastics have been developed wherein fibers are passed through dispersions of thermoplastic polymers in water containing a dispersion stabilization agent to wet the fibers with the thermoplastic resin and removing at least part of the water. Typically the formed structures are cut to form pellets for use in further processing. Exemplary references disclosing relevant processes include US 6,818,698; US 5,437,928; US 5,891,284; US 5,972,166; US 2008/118728; and US 7,803,865; all incorporated herein by reference in their entirety.

Many of these processes utilize materials in the dispersion that require neutralization of the carboxylic acid groups in the polymers utilized so as to stabilize the dispersions for the process to work in an optimal manner. Typically the neutralizer is a base, such as sodium hydroxide, potassium hydroxide and ammonium based compounds. Many of the neutralizers can introduce undesirable odors into the formed thermoplastic concentrates. Ultimate users of the concentrates desire low or no odor materials. In many of the disclosed processes wetting of the fibers by the thermoplastic polymers is problem-atic and the resulting dried pellets have fibers protruding such that the pellets appear to have a fuzz, fluff or angel hairs on their surface. Such protruding fibers can inhibit further processing and can impact the surface appearance of resulting structures. Due to these wetting problems and fiber protrusion these pellets may not be sufficiently robust to be transferred by certain highly efficient processes such as being conveyed by air means. The polymers in these dispersions contain a significant concentration of acid groups or acid forming groups the presences of which can negatively impact the thermal aging of parts formed from them. Further the process for forming the dispersions requires multiple steps and a significant energy expenditure for their preparation.

In many industrial processes the long fiber reinforced thermoplastic based structures are formed by blending concentrates of long glass fibers in thermoplastic polymers with pellets of unreinforced thermoplastic polymers, sometimes referred to as natural thermoplastic polymers. This is often colloquially referred to as a salt and pepper process. To enhance the productivity of some of these processes high flow rate natural thermoplastic polymers are utilized. In a number of these processes using polyolefins, polyolefins having high flow rates, prepared by breaking the polymer chains through a process of cracking, are utilized. The polyolefins are cracked by reacting them in the pres-ence of peroxides to reduce the chain length and thus the viscosity. Cracked polyolefins contain high levels of volatile materials as a result of the process used to prepare the cracked polyolefins. The presence of volatile materials can present problems in down-stream processing of the long fiber reinforced thermoplastic compositions.

In many structures only certain sections require higher strength materials. Structures prepared from a uniform composition of thermoplastic polymers and long fibers may contain more fibers than the structure requires which adds weight and cost which can be undesirable. Further there is always a demand for thermoplastic materials with higher moduli, tensile strengths, impact resistance and the like.

Woven and non-woven fiber containing structures wherein the fibers are coated with thermoplastic polymers are utilized in a number of applications including windmill blades, reinforced automobile panels, structural components for a variety of structures, sporting goods, leisure items, reinforced tubes and conduits, wall papers and wall reinforcements, and the like. To effectively coat the fibers in these structures with thermoplastic polymers it is conventional to coat the fibers with the polymers before formation of the structures. It is difficult to form the desired structures with pre-coated fibers. The problem with coating the structures with thermoplastics is that a significant surface area of the fibers in the structures are not coated. This negatively impacts the use of such structures because fibers that are not coated by matrix do not constitute to various mechanical properties such as flexural strength.

Thus, what is needed is are compositions of thermoplastic materials that exhibit one or more of the following characteristics; low fiber protrusion (reduced fluff, or angel hair formation); robust pellets that can be conveyed by efficient transfer processes, such as air conveying processes; low concentration of volatile neutralizers that introduce odors; low concentration of volatile products from cracking of thermoplastic polymers, pellets prepared from uncracked thermoplastics that can be efficiently processed; com-positions that improve blending of natural thermoplastic polymers with long fiber concen-trates or which eliminate the need for such blending; compositions that facilitate localized reinforcement of thermoplastic structures; and processes that facilitate the preparation of such compositions. What is needed is compositions that can also coat preformed structures from fibers. What are needed are compositions and processes that provide for structures that have improved thermal aging properties and require less energy to prepare.

## SUMMARY

Disclosed are compositions containing polymeric mixtures useful in coating fiber containing structures wherein the structures can be further coated with polymeric compositions, such as thermoplastic compositions, or can be dispersed and blended in polymeric compositions, including thermoplastic compositions to form fiber reinforced structures. Disclosed is a polymeric composition comprising: a) one or more lattices containing one or more co-polymers containing the residue of one or more monomers of one or more ethylenically unsaturated aromatic monomers, one or more alkadienes, and one or more (meth) acrylates wherein the polymer particles in the lattices have a particle size in the nanometer range; and b) a polyolefin dispersion containing a mixture containing one or more polyole-fins wherein the polymer particles in the dispersion have a particle size in the micron range. This composition may contain a) from about 25 to about 95 percent by weight of the one or more lattices; and b) from about 5 to about 75 percent of the polyolefin disper-sion. The mixture forms polymeric matrices which can coat 90 percent or greater of the surface area of fibers in a fiber containing structure. Such fiber containing structures may be bundles of fibers, such as those commonly referred to as rovings, fiber containing woven structures and non-woven structures. The polymer particles in the one or more lat-tices may have a particle size of about 20 nanometers to about 700 nanometers; and the polymer particles in the dispersion may have a particle size of about 1 micron to about 500 microns.

The polyolefin dispersion may comprise a dispersant and a mixture comprising one or more polyolefins, one or more hindered phenol antioxidants, one or more phosphite antioxidants and one or more acid neutralizers. The acid neutralizer of the polyolefin mixture may comprise one or more volatile nitrogen containing compounds. The polyolefin mixture may include one or more thioester antioxidants. The polyolefin mixture may include one or more polyolefins with maleic anhydride or a hydrolysis product thereof grafted to the backbone.

The lattices may contain one or more co-polymers containing the residue of two or more monomers of one or more ethylenically unsaturated aromatic monomers, one or more alkadienes, and one or more (meth) acrylates. The one or more lattices may be based on one or more copolymers of one or more ethylenically unsaturated aromatic monomers and one or more (meth)acrylates; one or more ethylenically unsaturated aromatic monomers and one or more alkadienes; one or more (meth)acrylates and one or more alkadienes; one or more methacrylates and one or more acrylates, or mixtures thereof. The one or more copoly-mers may contain one or more unsaturated carboxylic acids. The one or more unsaturated carboxylic acids are acrylic acid, methacrylic acid, itaconic acid, fumaric, maleic acid or mixtures thereof. The one or more copolymers may contain one or more hydroxyl alkyl acrylates.

Disclosed is a composition comprising: a polymeric matrix comprising a polyolefin mixture of one or more polyolefins, one or more hindered phenol antioxidants, one or more phosphite antioxidants and one or more acid neutralizers; and one or more copolymers containing the residue of one or more monomers of one or more ethylenically unsaturated aromatic monomers, one or more alkadienes, and one or more (meth) acrylates; and one or more bundles, woven structures or non-woven structures of fibers; wherein the one or more bundles, woven structures or non-woven structures of fibers have the polymeric matrix coated on about 90 percent of the surface area of the fibers in the one or more bundles, woven structures or non-woven structures.

Disclosed are compositions wherein the one or more bundles, woven structures or nonwoven structures of fibers having a polymeric matrix coated on the fibers have coated about the structures a thermoplastic composition. The thermoplastic composition coated about the one or more bundles, woven structures or nonwoven structures of fibers may comprise a polyolefin having a melt flow rate of 70 or greater which is uncracked or prepared using metallocene catalysts.

Disclosed are methods comprising a) passing one or more bundles, woven or nonwoven structures of fibers through a bath comprising a composition disclosed herein so as to coat the fibers with the polymeric matrix wherein 90 percent of the surface area of the fibers are coated with the polymeric matrix; b) passing the polymeric matrix and bundles, woven or nonwoven structures of fibers through an oven to volatilize away the volatile components of the bath; and c) cutting the polymeric matrix and the bundles, woven or nonwoven structures of fibers into a desired length. A plurality of the bundles of fibers may be passed through a die as they exit the dispersion to shape the plurality of bundles in the direction transverse to the orientation of the fibers and the polymeric matrix and bundles of fibers are bonded together in the formed shape in the oven. After exiting the oven a thermoplastic composition may be coated on the polymeric matrix disposed on the bundles, woven or nonwoven structures of fibers; the polymeric matrix and bundles, woven or nonwoven structures of fibers are then passed through a second oven to bond the thermoplastic matrix to the polymeric matrix; and the bundle woven or nonwoven structures of fibers is cut into the desired length. The methods may be performed such that after exiting the oven a thermoplastic composition is coated on the polymeric matrix in which the bundle of fibers is disposed; and the bundle or fibers is then passed through another oven or oven section to bond the thermoplastic composition to the polymeric matrix; and the bundle of fibers is cut into the desired length. The compositions may contain more than one type of fiber which allows tailoring of the properties of structures prepared from the compositions for a variety of needs.

Disclosed is a structure containing two or more layers comprising the polymeric matrix disposed on the bundles, woven or nonwoven structures of fibers wherein the layers are bonded together with a layer of one or more thermoplastic polymers. The thermoplastic polymers maybe any thermoplastic polymers which bond to the two or more layers comprising the polymeric matrix disposed on the bundles, woven or nonwoven structures of fibers.

Some of the compositions disclosed herein exhibit low fluff, fuzz or angel hair structures. Some of the compositions disclosed herein exhibit low volatile component content, such as one or more neutralization agents or polymer cracking catalysts or byproducts. Compositions containing thermoplastic polymer bonded to the polymeric matrix about the fiber or structures containing the fiber can reduce the amount of natural polymer required for dilution to the desired fiber content or prevent the need for blending the concentrate with natural polymers. Some of the structures that can be prepared can be used for localized reinforcement. Some of the compositions disclosed exhibit improved bonding of the fibers to the thermoplastic polymer which enhances the strength and modulus of the fiber reinforced thermoplastic polymers. Some of the compositions exhibit enhanced thermal stability. Some of the compositions can be prepared in a manner that reduces the energy required for their preparation.

## DESCRIPTION OF THE DRAWINGS

Figure 1 is a depiction of one layout of equipment used in a process disclosed herein.
Figure 2 is a depiction of a second layout of equipment used in a process disclosed herein.
Figure 3 is a depiction of a process for blending pellets of a polymeric matrix containing bundles of fibers with a natural polyolefin.
Figure 4 is a depiction of a process using a polymer melt to coat the fiber bundles.

## DETAILED DESCRIPTION

The explanations and illustrations presented herein are intended to ac-quaint others skilled in the art with the invention, its principles, and its practical application. Accordingly, the specific embodiments of the present invention as set forth are not intended as being exhaustive or limiting of the scope of the disclosure. The scope of the disclosure should be determined with reference to the appended claims, along with the full scope of equivalents to which such claims are entitled. The disclosures of all articles and references, including patent applications and publications, are incorporated by reference for all purposes. Other combinations are also possible as will be gleaned from the following claims, which are also hereby incorporated by reference into this description.

Disclosed are compositions useful for coating fiber containing structures comprising a mixture of one or more latices containing one or more co-polymers containing the residue of one or more ethylenically unsaturated aromatic monomers , one or more alkadienes, or one or more (meth) acrylates wherein the polymer particles in the latices have a particle size in the nanometer range and a polyolefin dispersion containing one or more polyolefins wherein the polymer particles in the dispersion have a particle size in the micron range. The fiber containing structure can be any fiber containing structure that can be passed through a bath and be capable of being coated by the bath. Disclosed are compositions comprising fiber containing structures having coatings on the fibers compris-ing the solid components of the mixture of the latices and the polyolefin dispersion. The polyolefin dispersion may comprise one or more polyolefins, one or more hindered phenol antioxidants, one or more phosphite antioxidants and one or more acid neutralizers. The coated structures are generally prepared by passing one or more fiber structures through an aqueous bath of the mixture of one or more latices and the polyolefin dispersion to form a polymeric matrix which is coated about the fibers in the structure. The coated fiber containing structures may optionally be shaped the one or more bundles of fibers into a desired cross-sectional shape; and cutting the prepared structures into a desired length, typically along the direction the fiber containing structures are passed through the bath.

One or more as used herein means that at least one, or more than one, of the recited components may be used as disclosed. Heteroatom means nitrogen, oxygen, sulfur and phosphorus, more preferred heteroatoms include nitrogen and oxygen. Hydrocarbyl refers to a group containing one or more carbon atom backbones and hydrogen atoms, which may optionally contain one or more heteroatoms. Where the hydrocarbyl group contains heteroatoms, the heteroatoms may form one or more functional groups well known to one skilled in the art. Hydrocarbyl groups may contain cycloaliphatic, aliphatic, aromatic or any combination of such segments. The aliphatic segments can be straight or branched. The aliphatic and cycloaliphatic segments may include one or more double and/or triple bonds. Included in hydrocarbyl groups are alkyl, alkenyl, alkynyl, aryl, cycloalkyl, cycloalkenyl, alkaryl and aralkyl groups. Cycloaliphatic groups may contain both cyclic portions and noncyclic portions. Hydrocarbylene means a hydrocarbyl group or any of the described subsets having more than one valence, such as alkylene, alkenylene, alkynylene, arylene, cycloalkylene, cycloalkenylene, alkarylene and aralkylene. As used herein percent by weight or parts by weight refer to, or are based on, the weight of the compositions unless otherwise specified.

The lattices used in the disclosed compositions may be any lattices that form a stable mixture with the polyolefin based dispersions and which can coat the fibers in the fiber containing structures. The lattices may contain copolymers containing one or more ethylenically unsaturated aromatic monomers, one or more alkadienes, and/or one or more (meth) acrylates. The lattices may contain copolymers containing two or more monomers selected from ethylenically unsaturated aromatic monomers, alkadienes, and (meth) acrylates. The lattices may contain copolymers containing one or more ethylenically unsaturated aromatic monomers and one or more (meth)acrylates; one or more ethylenically unsaturated aromatic monomers and one or more alkadienes; one or more methylmethacrylates and one or more alkadienes; one or more methyl methacrylates and one or more (meth)acrylates, or mixtures thereof. The one or more copolymers in the lattices may contain one or more unsaturated carboxylic acids. The one or more copolymers of the lattices may contain one or more hydroxyl alkyl acrylates. The one or more lattices may contain one or more copolymers of styrene, butyl acrylate and one or more of acrylic and methacrylic acid. The one or more lattices may comprise one or more copolymers of styrene, butyl acrylate, acrylic and/or methacrylic acid and hydroxyl alkyl acrylates. Some lattices may contain as the main component of the co-polymer formed one or more ethylenically unsaturated aromatic monomers. Some lattices may contain as the main component of the co-polymer formed one or more (meth)acrylate monomers. As used herein the main component is the monomer in the copolymer having the highest weight percentage.

Where the main component is one or more ethylenically unsaturated aromatic monomers The ethylenically unsaturated aromatic monomers used in the preparation of the copolymers may be one or more monovinyl or vinylidene aromatic monomers **correspond to the formula CH2=CR-Ar, wherein R is hydrogen, halogen or $C_{1-4}$ alkyl** and Ar is a $C_6$ aromatic radical that is optionally substituted by at least one $C_{1-4}$ alkyl group, or chlorine or bromine. Exemplary ethylenically unsaturated aromatic monomers,include monovinylidene aromatic monomers, such as styrene, alpha-methyl styrene, vinyl toluene, and $C_{1-4}$ alkyl and chloro and bromo derivatives thereof. The ethylenically unsaturated aromatic monomers may be styrene. The amount of the ethylenically unsaturated aromatic monomer in the copolymer may be any amount that facilitates preparation of a polymeric matrix which can coat the fibers in the fiber coating structures. Where the main component is one or more ethylenically unsaturated aromatic monomers, the amount of the ethylenically unsaturated aromatic monomer in the copolymer may be about 20 percent by weight or greater or about 30 percent by weight or greater, based on the monomer mixture.. Where the main component is one or more ethylenically unsaturated aromatic monomers, the amount of the ethylenically unsaturated aromatic monomer in the copolymer may be about 80 percent by weight or less, about 70 percent by weight or less or about 60 percent by weight or less, based on the monomer mixture. Where the main component is not one or more ethylenically unsaturated aromatic monomers, the amount of the ethylenically unsaturated aromatic monomer in the copolymer may be about 0 percent by weight or greater, about 0.1 percent by weight or greater, or about 0.5 percent by weight or greater. Where the main component is not one or more ethylenically unsaturated aromatic monomers, the amount of the ethylenically unsaturated aromatic monomer in the copolymer may be about 20 percent by weight or less, about 15 percent by weight or less or about 10 percent by weight or less. The percentage of all monomers in the copolymer totals to 100 percent.

The alkadiene may be a conjugated diene. The alkadiene may be a $C_{4-6}$ aliphatic conjugated diene, for example isoprene, 1,3 butadiene, 2-methyl-1,3-butadiene or a chlorinated butadiene. The alkadiene may be 1,3-butadiene and isoprene, particularly 1,3-butadiene. The alkadiene may be present in the copolymer in an amount of about 10 percent by weight or greater, about 20 percent by weight or greater or about 30 percent by weight or greater. The alkadiene may be present in the copolymer in an amount of about 80 percent by weight or less, about 70 percent by weight or less about 60 percent by weight or less.

The copolymer may also contain an alkyl acrylate or methacrylate (abbreviated herein to alkyl(meth)acrylate). Alkyl (meth)acrylates may be ($C_{1-20}$) alkyl esters of acrylic or methacrylic acid, for example methylacrylate, methyl methacrylate, ethylacrylate, ethyl methacrylate, butylacrylate, butyl methacrylate, 2-ethyl-hexylacrylate or 2-ethyl-hexyl methacrylate. Mixtures of two or more alkyl acrylates may be used. Butylacrylate may be used. The amount of the alkyl (meth)acrylate is present is selected to increase polarity and adjust glass transition temperature. Where the alkyl (meth)-acrylate is the main component, the amount of the alkyl (meth)acrylate may be present in the copolymer in about 20 percent by weight or greater, about 25 percent by weight or greater, 30 percent by weight or greater or about 40 percent by weight or greater. Where the alkyl (meth)acrylate is the main component, the amount of the alkyl (meth)acrylate may be present in the copolymer in about 80 percent by weight or less, about 70 percent by weight or less, or about 60 percent by weight or less. The amount of the alkyl (meth)acrylate is present is selected to provide additional functionality and interaction. Where the alkyl (meth)acrylate is not the main component, the amount of the alkyl (meth)acrylate may be present in the copolymer in about 0 percent by weight or greater, about 0.1 percent by weight or greater, 0.5 percent by weight or greater, about 1 percent by weight or greater or 4 percent by weight or greater. Where the alkyl (meth)acrylate is not the main component, the amount of the alkyl (meth)acrylate may be present in the copolymer in about 40 percent by weight or less, about 30 percent by weight or less, or about 20 percent by weight or less, about 15 percent by weight or less or about 10 percent by weight or less.

The copolymer may include an ethylenically unsaturated carboxylic acid. The ethylenically unsaturated carboxylic acid may be a $C_{3-6}$ ethylenically unsaturated carboxylic acid, and may contain one or two carboxylic acid groups. Exemplary acids include itaconic acid, fumaric acid, maleic acid, acrylic acid and methacrylic acid. A mixture of two or more such acids may be employed. The ethylenically unsaturated carboxylic acid increases the reaction rate, allowing a higher monomer conversion to be achieved in a shorter time, as well as increasing the stability of the product. The amount of ethylenically unsaturated carboxylic acid in the copolymer may be about 0.5 percent by weight or greater, about 1 percent by weight or greater, about 2 percent by weight. The amount of ethylenically unsaturated carboxylic acid about 20 percent by weight or less, about 10 percent by weight or less, or about 8 percent by weight or less.

The copolymer may also contain one or more hydroxyalkyl (meth)acrylates. The one or more hydroxyalkyl (meth)acrylates may be any that helps to increase adhesion to the glass fibers. Exemplary hydroxyalkyl (meth)acrylates include hydroxyethyl acrylate, hydroxyethyl methacrylate, 3-hydroxypropyl methacrylate, aminopropyl methacrylate, hydroxy-hexyl acrylate, hydroxy octyl methacrylate, hydroxybutyl methacrylate, hydroxy butyl acrylate, 3-hydroxypentyl acrylate, 6-hydroxynonyl acrylate, 3-hydroxypropyl meth-acrylate, 2-hydroxypentyl methacrylate, 5-hydroxypentyl meth-acrylate, 7-hydroxyheptyl methacrylate, 5-hydroxydecyl methacrylate, diethylene glycol monoacrylate, diethylene glycol monomethacrylate, glycerin dimethacrylate, tri-methylol propane dimethacrylate, alkoxylated hydroxyethyl acrylate, trimethylolpropane diacrylate, alkoxylated trimethylol-propane diacrylate, reaction products of polyether glycols of acrylic or methacrylic acid, the monoacrylate or monomethacrylate esters of bisphenol-A, the fully hydrogenated derivative of bisphenol-A, cyclohexyl diol, and the like. The hydroxyalkyl (meth)acrylates may be hydroxymethyl (meth)acrylate, 2-hydroxyethyl hydroxyethyl (meth)acrylate, hydroxylpropyl (meth)acrylate, and 2-hydroxy propyl (meth)acrylate. The hydroxyalkyl (meth)acrylates are utilized in a sufficient amount to promote adhesion to the glass fibers. The hydroxy alkyl (meth)acrylates may be present in the copolymer in about 1 percent by weight or greater, about 3 percent by weight or greater, or 5 percent by weight or greater. The hydroxyl alkyl (meth)acrylates may be present in the copolymer in about 15 percent by weight or less, about 10 percent by weight or less, or about 8 percent by weight or less.

The copolymer may also contain additional ethylenically unsaturated monomers. Exemplary additional monomers include amine-functional vinyl monomers such as, for example, acrylamide or a derivative thereof; unsaturated nitriles such as, for example, acrylonitrile and methacrylonitrile; ethylenically unsaturated carboxamides such as, for example, acrylamide and methacrylamide; vinyl esters of saturated $C_{1-18}$ carboxylic acids, for example vinyl acetate; allyl esters of saturated carboxylic acids, vinyl ethers, vinyl ketones, dialkyl esters of ethylenically unsaturated dicarboxylic acids, N-vinyl-pyrrolidone, N-vinylpyrrolidine, N-vinylformamide, N,N-dialkylaminoalkylacrylamides, N,N-dialkylaminoalkylmethacrylamides, N,N-dialkylaminoalkyl acrylates, N,N-dialkyl-aminoalkyl methacrylates, vinyl chloride and vinylidene chloride. Other monomers may be monoethylenically unsaturated or polyunsaturated monomers, more particularly cross-linking monomers having two or more ethylenic double bonds, for example alkanediol diacrylates, a specific example being butanediol diacrylate. Ethylenically unsaturated compounds other than the monomers mentioned hereintofore can be used. The additional ethylenically unsaturated monomers can be used in the copolymers in amounts of 0 percent by weight or greater, about 0.1 percent by weight or greater, about 0.5 percent by weight or greater. The additional ethylenically unsaturated monomers can be used in the copolymers in an amount of about 20 percent by weight or less, about 15 percent by weight or less or about 10 percent

by weight or less. The crosslinkers may be present in an amount of about 0.01 to about 1 percent by weight base on the weight of the composition.

The lattices may comprise surfactants or emulsifiers to stabilize the copolymer particles in a water emulsion.

Any surfactants or emulsifiers that stabilize the copolymer particles in a water emulsion may be used. Exemplary surfactants include saturated and ethylenically unsaturated sulfonic acids or salts thereof, including, for example, hydrocarbon sulfonic acids, such as, vinyl sulfonic acid, allyl sulfonic acid, and methallyl sulfonic acid, and salts thereof; aromatic hydrocarbon-sulfonic acids, such as, for example, p-styrene sulfonic acid, isopropenyl benzene sulfonic acid, and vinyloxy-benzene sulfonic acid, and salts thereof; sulfoalkyl esters of acrylic acid and methacrylic acid, such as, for example, sulfoethyl methacrylate and sulfopropyl methacrylate and salts thereof; and 2-acrylamido-2-methylpropanesulfonic acid and salts thereof; alkylated diphenyl oxide disulfonates, sodium dodecyl benzene sulfonates and dihexyl esters of sodium sulfosuccinic acid, ethoxylated alkyl phenols and ethoxylated alcohols; and sulfosuccinate ester salts, alkylethoxylated sulfate and alkylethoxylated sulfonate salts, alkyl(poly)phosphate salts, and alkyl sulfate and alkyl sulfonate salts. The type and concentration of surfactant is dependent on the polymer solids level and latex particle size. A higher polymer solids level and a low particle size will generally increase the need for surfactant. The surfactants or emulsifiers may be used in an amount which stabilizes the copolymer particles in the emulsion formed. The surfactants or emulsifiers may be used in an amount based on the weight of the copolymers in an amount of about 0.05 percent by weight or greater or about 0.5 percent by weight or greater. The surfactants or emulsi-fiers may be used in an amount based on the weight of the copolymers in an amount of about 20 percent by weight or less, about 10 percent by weight or less or about 5 percent by weight or less.

Various other additives and ingredients known to those skilled in the art can be incorporated copolymer lattices disclosed. Such additives include, for example, metal chelating agents, pH buffering agents, anti-foaming agents, wetting agents, thickeners, plasticizers, fillers, pigments and antioxidants. Known anti-foaming agents include silicon oils, polysiloxane oils, acetylene glycols, mineral oils and paraffinic oils and formulated compounds. Common known wetting agents include alkylphenol ethoxylates, alkali metal dialkyl sulfosuccinates, acetylene glycols and alkali metal alkyl sulfates. Typical thickeners include polyacrylates, polyacrylamides, xanthan gums, modified celluloses or particulate thickeners such as silicas and clays. Typical plasticizers include mineral oil, liquid polybutenes, liquid polyacrylates and lanolin. Zinc oxide, titanium dioxide, aluminum hydrate, calcium carbonate, and clay are typically employed fillers.

The copolymer lattices used exhibit particle sizes in the nanometer range meaning all of the particle sizes of the latices fall in the nanometer range. The copolymer lattices exhibit particle sized in the nanometer range such that the polymeric matrix containing the copolymer lattices can coat 90 percent of greater of the surface area of the filbers in fiber containing structures. The copolymer lattices exhibit particle sizes of 20 nanometers or greater, about 50 nanometers or greater or about 100 nanometers or greater. The copolymer lattices exhibit particle sizes of 700 nanometers or less, about 500 nanometers or less or about 200 nanometers or less. Particle size is the volume average as determined by dynamic light scattering_using a Nanotrac 150 from Microtrac. The lattices of the copolymers contain solids contents which facilitate efficient coating of the surface area of the filbers in fiber containing structures. Solids contents refer to the weight percentage of solids in the lattices. The solids content of the copolymer lattices based on the weight of the lattices may be about 25 percent by weight or greater, about 30 percent by weight or greater or about 40 percent by weight of greater. The solids content of the copolymer lattices based on the weight of the lattices may be about 70 percent by weight or less, about 65 percent by weight or less or about 55 percent by weight of less.

The lattices may have a Gel content of 0 percent by weight or greater or about 69 percent by weight or greater. The lattices may have a Gel content of 80 percent by weight or less. Gel content is determined by the following procedure. The latex is first dried and weighed before being solubilized in a solvent such as toluene. Where the density of cross-links is low, the latex dissolves, but highly cross-linked latex will swell and form a gel. The solvent solution is filtered and the gel collected. Once dried, it is weighed, and this number is divided by the original weight to arrive at a gel percentage. Copolymer lattices useful in the disclosed compositions and processes are commercially available from a number of sources. The copolymer can be prepared by polymerization processes which are known in the art, and particularly by the known latex emulsion polymerization processes. Representative processes include those described in U.S. Pat. No. 4,478,974, U.S. Pat. No. 4,751,111, U.S. Pat. No. 4,968,740, U.S. Pat. No. 3,563,946, U.S. Pat. No. 3,575,913, DE 1 905 256, US 8,003,716, US 8,637,160; US 2013/0066011 and WO 2011/079011.

The polymeric matrix comprises a polyolefin mixture which contains one or more polyolefins. A polyolefin is a polymer prepared by polymerization of unsaturated groups of one or more compounds having a straight or branched hydrocarbon chain. Exemplary olefin monomer compounds include those having a straight or branched hydrocarbon chain such as ethylene, propylene, 1-butene, 3 -methyl- 1-butene, 4-methyl-l-pentene, 3-methyl-l-pentene, 1-heptene, 1-hexene, 1-octene, 1-decene, and 1-dodec-ene. The polyolefins useful can be homopolymers or copolymers of more than one com-pounds having a straight or branched hydrocarbon chain. Any polyolefin that can molded may be utilized in the composition. The polyolefins may comprise elastomers and blends of olefin polymers. Exemplary polyolefins include polyethylene, polypropylene, poly-1-butene, poly-3-methyl-1-butene, poly-3-methyl-1-pentene, poly-4-methyl-l-pentene, ethyl-ene-propylene copolymers, ethylene-1-butene copolymers, and propylene-1-butene co-polymers (including elastomers) of an alpha-olefin with a conjugated or non-conjugated diene, as typically represented by ethylene-butadiene copolymers and ethylene-ethyli-dene norbornene copolymers; and polyolefins (including elastomers) such as copolymers of two or more alpha-olefins with a conjugated or non-conjugated diene, as typically represented by ethylene-propylene-butadiene copolymers, ethylene-propylene-dicyclo-pentadiene copolymers, ethylene-propylene-1,5-hexadiene copolymers, and ethylene-propylene-ethylidene norbornene copolymers; ethylene-vinyl compound co-polymers such as ethylene-vinyl acetate copolymers, ethylene-vinyl alcohol copolymers, ethylene-vinyl chloride copolymers, ethylene acrylic acid or ethylene-(meth)acrylic acid copolymers, and ethylenes (meth)acrylate copolymers. Exemplary polyolefins may be ethylene-based polymers, propylene-based polymers, propylene-ethylene copolymers, ethylene-alpha olefin copolymers or propylene-alpha olefin **copolymers, ethylene-propylene-diene ter-polymers. Exemplary olefinic polymers include** homogeneous polymers, as described in U.S. Pat. No. 3,645,992 issued to Elston; high density polyethylene (HDPE), as described in U.S. Pat. No. 4,076,698 issued to Anderson; heterogeneously branched linear low density polyethylene (LLDPE); heterogeneously branched ultra-low linear density polyethylene (ULDPE); homogeneously branched, linear ethylene/alpha-olefin copoly-mers; homogeneously branched, substantially linear ethylene/alpha-olefin polymers, which can be prepared, for example, by processes disclosed in U.S. Pat. Nos. 5,272,236 and 5,278,272, the disclosures of which are incorporated herein by reference; and high pressure, free radical polymerized ethylene polymers and copolymers such as low density polyethylene (LDPE) or ethylene vinyl acetate polymers (EVA). The polyolefin may be a propylene-based copolymer or interpolymer. The propylene-based copolymer or interpoly-mer may be characterized as having substantially isotactic propylene sequences. The propylene-based polymer may be a propylene-ethylene copolymer or interpolymer, where ethylene may be present in an amount from about 5% to about 25% by weight. Some pro-pyl-enerich alpha-olefin interpolymers may have from 5 to 25 percent by weight of ethylene-derived units and 95 to 75 percent by weight of propylene-derived units. The pro-pylene rich alpha-olefin interpolymer may comprise 6 to 20 percent by weight of ethylene-derived units and 94 to 80 percent by weight of propylene-derived units. The polymers may comprise 8 to 20 percent by weight of ethylene-derived units and 92 to 80 percent by weight of propylene-derived units. The polymers may comprise 10 to 20 percent by weight of ethylene derived units and 90 to 80 percent by weight of propylene-derived units.

The polyolefin may comprise an alpha-olefin interpolymer of ethylene with a comonomer comprising an alkene, such as 1- octene. The ethylene and octene copolymer may be present alone or in combination with another polyolefin resin. When present together, the weight ratio between the ethylene and octene copolymer and another polymer may range from about 1:10 to about 10:1, such as from about 3:2 to about 2:3. The polymeric resin, such as the ethylene-octene copolymer, may have a crystallinity of less than about 50 percent, or less than about 25 percent. The crystallinity of the polymer may range from 5 to 35 percent. The polyolefins may include at least one multi-block olefin interpolymer. Suitable multi-block olefin interpolymers may include those described in U.S. 8,916,640, for example. The term "multi-block copolymer" or refers to a polymer compris-ing two or more chemically distinct regions or segments (referred to as "blocks") preferably joined in a linear manner, that is, a polymer comprising chemically differentiated units which are joined end-to-end with respect to polymerized ethylenic functionality, rather than in pendent or grafted fashion. The blocks differ in the amount or type of comonomer incor-porated therein, the density, the amount of crystallinity, the crystallite size attributable to a polymer of such composition, the type or degree of tacticity (isotactic or syndiotactic), regio-regularity or regio-irregularity, the amount of branching, including long chain branch-ing or hyper-branching, the homogeneity, or any other chemical or physical property. The multi-block copolymers are characterized by unique distributions of polydispersity index (PDI or Mw/Mn), block length distribution, and/or block number distribution due to the unique process making of **the copolymers. Exemplary multi-block olefin interpolymers include ethylene/α-olefin block interpolymers and propylene/a-olefin interpolymers.**

Elastomeric interpolymers of ethylene, a $C_{3-20}$ α**-olefin, especially propyl-ene,** and optionally one or more diene monomers may be used as the polyolefins. Exemplary α**-olefins may be designated by the formula** $CH_2=CHR^*$, where R* is a linear or branched **alkyl group of from 1 to 12 carbon atoms. Examples of a-olefins include propylene, isobutylene, 1-butene, 1-pentene, 1-hexene, 4-methyl-i-pentene, and 1-octene. The** α-olefin may be propylene. The propylene-based polymers may be EP or EPDM polymers and include dienes. Exemplary dienes include conjugated or non-conjugated, straight or branched chain-, cyclic- or polycyclic-dienes comprising from 4 to 20 carbons. Such dienes include 1,4-pentadiene, 1,4- hexadiene, 5-ethylidene-2-norbor-nene, dicyclopentadiene, cyclohexa diene, and 5- butylidene-2-norbornene.

The polyolefins may be functionalized by incorporating at least one func-tional group in its polymer structure. Exemplary functional groups may include carboxylic acids or structures that form carboxylic acids upon hydrolysis in water, for example maleic anhydride. Ethylenically unsaturated compounds that can introduce such functional groups into the backbone of the polyolefins include ethylenically unsaturated mono- and di-functional carboxylic acids, ethylenically unsaturated mono- and di-functional carboxylic acid anhydrides, salts thereof and esters thereof. Such functional groups may be grafted to an olefin polymer, or it may be copolymerized with an olefin, such as ethylene or propylene, and an optional additional comonomer to form an interpolymer of olefin, the functional comonomer and optionally other comonomer(s). Means for grafting functional groups onto polyolefins are described for example in U.S. Patents Nos. 4,762,890, 4,927,888, and 4,950,541, the disclosures of which are incorporated herein by reference in their entirety. One particularly useful functional group is maleic anhydride. The amount of the functional group present in the functional polymer may vary and is chosen to enhance the final properties of the composition. The functional group may be present in an amount of about 0.25 weight percent or more; about 5 weight percent or more; or about 7 weight percent or more based on the weight of the polyolefins present. The functional group may be present in an amount of about 40 weight percent or less; about 30 weight percent or less; or about 25 weight percent or less based on the weight of the polyolefins present.

The polyolefins may comprise one or more non-polar polyolefins. The poly-olefins may comprise one or more non-polar polyolefins and one or more functionalized polyolefins. The functionalized poly-olefins may contain carboxylic acids, for example ethylene acrylic acid, or groups which form carboxylic acids upon hydrolysis of functional groups present, for example maleic anhydride groups. The polyolefin mixture may comprise one or more non-polar polyolefins, optionally one or more functional polyolefins, and one or more impact polyolefins. An impact polyolefin is a polyolefin having its backbone modified to improve the elasticity of the polyolefin so as to improve the impact resistance of com-positions containing the impact polyolefin. Impact polyolefins comprise one or more of the following polyolefins: copolymers of an alpha-olefin with a conjugated or non-con-jugated diene, as typically represented by ethylene-butadiene copolymer and ethylene-ethylidene norbornene copolymer; copolymers of two or more alpha-olefins with a conju-gated or non-conjugated diene, as typically represented by ethylene-propylene-butadiene copolymer, alpha-olefin interpolymer of ethylene with a comonomer comprising an alkene, such as 1- octene; multi-block olefin interpolymers; with interpol-ymers of ethylene, a $C_3$ - $C_{20}$ **a-olefin, especially propylene,.**

The polyolefins useful in the polyolefin mixture may exhibit any molecular weight that provides a moldable composition. The polyolefins may exhibit a weight average molecular weight, as measured by GPC using a Agilent PLgel Olexis column and polystyrene standards, as described in Analysis of Polyolefins by GPC/;SEC Application Compendium, by Greg Saunders and Ben MacCreath of Agilent Technologies, Inc" 2011 (available at www.agilent.com/chem/gpcsec), of about 10,000 Daltons or greater, about 30,000 Daltons or greater, about 50,000 Daltons or greater or about 100,000 Daltons or greater. The polyolefins may exhibit a weight average molecular weight as measured by GPC of about 400,000 Daltons or less, about 350,000 Daltons or less, about 300,000 Daltons or less or about 260,000 Daltons or less. The non-polar polyolefins may exhibit a weight average molecular weight as measured by GPC of about 10,000 Daltons or greater, about 30,000 Daltons or greater or about 100,000 Daltons or greater. The non-polar polyolefins may exhibit a weight average molecular weight of about 400,000 Daltons or less, about 350,000 Daltons or less, about 300,000 Daltons or less, about 260,000 Daltons or less or about 240,000 Daltons or less. The functionalized polyolefins may exhibit a weight average molecular weight as measured by GPC of about 2,000 Daltons or greater, about 3,000 Daltons or greater, about 5,000 Daltons or greater or about 10,000 Daltons or greater. The functionalized polyolefins may exhibit a weight average molecular weight as measured by GPC of about 200,000 Daltons or less, about 160,000 Daltons or less, about 130,000 Daltons or less or about 100,000 Daltons or less. The weight ratio of non-polar to functional polyolefins in the polyolefin mixture may be about 1:5 or greater, about 1:2 or greater or about 2:3 or greater. The ratio of non-polar to functional polyolefins in the poly-olefin mixture may be about 5:1 or less, about 5:2 or less or about 5:3 or less.

The polyolefin mixture may further comprise one or more hindered phenol antioxidants which function by scavenging peroxy radical intermediates in the polymeric matrix. The one or more hindered phenol antioxidants are present in sufficient amount to scavenge peroxy radical intermediates in the polymeric matrix. Any hindered phenol antioxidant that performs the recited function may be used in the polyolefin mixture. Exemplary hindered phenol anti-oxidants include compounds with one or more mono-hydroxyphenyl (i.e. "phenol") moieties and one or more aliphatic or aromatic substituents wherein each mono-hydroxyphenyl moiety contains one or two aliphatic substituents, e.g. methyl, tert. -butyl, tert.-pentyl, at least one thereof being located in the ortho-position relative to the phenolic OH. Specific hindered phenol anti-oxidants include: alkylated monophenols, for example 2,6-di-tert-butyl-4-methylphenol, 2-tert-butyl-4,6-dimethyl-phenol, 2,6-di-tert-butyl-4-ethylphenol, 2,6-di-tert-butyl-4-n-butyl-phenol, 2,6-di-**tert-butyl-4-isobutylphenol, 2,6-dicyclopentyl-4-methylphenol, 2-(a-methyl-cyclohexyl)-**4,6-di-methylphenol, 2,6-dioctadecyl-4-methylphenol, 2,4,6-tricyclohexylphen-ol, 2,6-di-tert-butyl-4-methoxymethylphenol, 2,6-di-nonyl-4-methylphenol, 2,4'-di-methyl-6-(1'-methyl undec-1'-yl)phenol, 2,4-dimethyl-6-(1'-methylheptadec-1'-yl)phenol, 2,4-di-methyl-6-(1'-methyltridec-1'-yl)phenol and mixtures thereof; alkylthiomethylphenols, for example 2,4-di octylthiomethyl-6-tert-butylphenol, 2,4-dioctylthiomethyl-6-methylphenol, 2,4-dioctyl thio methyl-6-ethylphenol, 2,6-di-dodecylthiomethyl-4-nonylphenol; hydroquinones and alkyl-ated hydroquinones, for example 2,6-di-tert-butyl-4-methoxyphenol, 2,5-di-tert-butyl hydroquinone, 2,5-di-tert-amylhydroquinone, 2,6-diphenyl-4-octadecyl-oxyphenol, 2,6-di-tert-butylhydroquinone, 2,5-di-tert-butyl4-hydroxyanisole, 3,5-di-tert-butyl-4-hydroxy- anisole, 3,5-di-tert-butyl-4-hydroxyphenylstearate, bis-(3,5-di-tert-butyl-4-hy-droxy phenyl) adipate; hydroxylated thiodiphenyl ethers, for example 2,2'-thiobis(6-tert-butyl-4-methyl phenol), 2,2'-thiobis(4-octylphenol), 4,4'-thiobis(6-tert-butyl-3-methyl-phenol), 4,4'-thiobis (6-tert-butyl-2-methylphenol), 4,4'-thio-bis-(3,6-di-sec-amylphenol), 4,4'-bis-(2,6-dimethyl-4-hydroxyphenyl)disulfide; alkylidenebisphenols, for example 2,2'-methylene bis (6-tert-butyl-4-methylphenol), 2,2'-methylenebis(6-tert-butyl-4-ethylphen-ol), 2,2'-methylenebis **4 -methyl-6-(a-methylcyclohexyl)phenol, 2,2'-methylenebis(4-methyl-6-cyclohexyl** phenol), 2,2'-methylenebis(6-nonyl-4-methylphenol), 2,2'-methylenebis(4,6-di-tert-butyl phenol), 2,2'-ethylidenebis(4,6-di-tert-butylphenol), 2,2'-ethylidenebis(6-tert-butyl-4-**isobutyl phen-ol), 2,2'-methylenebis 6-($\alpha$-methylbenzyl)-4-nonyl-phenol, 2,2'-methylenebis 6-($\alpha$,$\alpha$-di-methylbenzyl)-4-nonylphenol, 4,4'-methylenebis(2,6-di-tert-butyl** phenol), 4,4'-methylene-bis(6-tert-butyl-2-methylphenol), 1,1-bis(5-tert-butyl-4-hydroxy-2-methyl phenyl) butane, 2,6-bis(3-tert-butyl-5-methyl-2-hydroxybenzyl)-4-methylphenol, 1,1,3-tris (5-tert-butyl-4-hydroxy-2-methylphenyl)butane, 1,1-bis(5-tert-butyl-4-hydroxy-2-methyl-phenyl)-3-n-do-decylmercaptobutane, ethylene glycol bis 3,3-bis (3'-tert-butyl-4'-hydroxy phenyl)butyrate, bis(3-tert-butyl-4-hydroxy-5-methyl-phenyl) di-cyclopentadiene, bis 2-(3'-tert-butyl-2'-hy-droxy-5'-methylbenzyl)-6-tert-butyl-4-methyl phenylterephthalate, 1,1-bis-(3,5-dimethyl-2-hydroxyphenyl)butane, 2,2-bis-(3,5-di-tert-butyl-4-hydroxyphenyl) propane, 2,2-bis-(5-tert-butyl-4-hydroxy2-methylphenyl)-4-n-doecyl-ercaptobutane, and 1,1,5,5-tetra-(5-tert-butyl-4-hydroxy2-methylphenyl)pentane; 3,4-Dihydro-2,5,7,8-tetramethyl-2-(4,8,12-tri-methyltridecyl)-2H-1-benzopyran-6-ol (Vitamin E). The hindered phenol anti-oxidant may be 3,4-Dihydro-2,5,7,8-tetramethyl-2-(4,8,12-trimethyltridecyl)-2H-1-benzopyran-6-ol (Vitamin E). The presence of 3,4-Dihydro-2,5,7,8-tetramethyl-2-(4,8,12-trimethyl-tridecyl)-2H-1-benzo pyran-6-ol (Vitamin E) improves the creep strength of the polymer matrix coated about the fibers. The hindered phenol antioxidants may be present in an amount of about 0.01 percent by weight or greater based on the weight of the polyolefin mixture, about 0.1 percent by weight or greater or about 0.2 percent by weight or greater. The one or more hindered phenol antioxidants may be present in an amount of about 2 percent by weight or less based on the weight of the polyolefin mixture, about 1.0 percent by weight or less or about 0.8 percent by weight or less.

The polyolefin mixture may further comprise one or more phosphite anti-oxidants. Any phosphite antioxidant that performs the function of stabilizing the composition against oxidation may be used. Exemplary phosphites include triphenyl phosphite, diphenylalkyl phosphites, phenyldialkyl phosphites, tris-(nonylphenyl)-phosphite, trilauryl phosphite, trioctadecyl phosphite, distearyl-pentaerythrite diphos-phate, tris-(2,4-di-tert-butylphenyl)-phosphite, diisodecylpentaerythrite-diphosphite, bis-(2,4-di-tert-butyl phenyl)-pentaerythrite diphosphate, bis-(2,6-di-tert-butyl-4-methyl-phenyl)-pentaerythrite diphosphate, bis-isodecyloxy-pentaerythrite diphosphate, bis-(2,4-di-tert-butyl-6-methyl-phenyl)-pentaerythrite diphosphate, bis-(2,4,6-tri-tert-butylphenyl)-pentaerythrite diphos**phate, tristearyl-sorbit-triphos-phite, tetrakis-(2,4-di-tert-butyl-phenyl)-4,4'-biphenylene-**di-phosphonite, 6-isooctyloxy-2,4,8,10-tetra-tert-butyl-12H-di-benz[d,g]-1,3,2-dioxa-phosphocine, 6-fluoro-2,4,8,1,0-tetra-tert-butyl-12-methyl-dibenz [d,g]-1,3,2-dioxaphosphocine, bis-(2,4-di-tert-butyl-6-methylphenyl)-methyl phosphite, bis-(2,4-di-tert-butyl-6-meth-ylphenyl)-ethyl phosphitebis-(2,4-dicumylphenyl) penta erythritol diphosphite (DOVERPHOS™ S-9228) tris-(2,4-di-t-butylphenyl) phosphite (DOVERPHOS™ S-480), distearyl pentaerythritol diphosphite (DOVERPHOS™ S-680), trisnonylphenyl phosphite (DOVERPHOS™ 4), phenyl diisodecyl phosphite (DOVERPHOS™ 7), diphenyl isodecyl phosphite (DOVERPHOS™ 8), triphenyl phosphite (DOVERPHOS™ 10), trilauryl phosphite (DOVERPHOS™ 53), alkyl (C12-C15) bisphenol A phosphite (DOVERPHOS™ 613), alkyl (C10) bisphenol A phosphite (DOVERPHOS™ 675), bis-(2,4-di-t-butylphenyl) pentaerythritol diphosphite (ULTRANOX™ 626), 2-butyl-2-ethyl-1,3-propanediol 2,4,6-tri-t-butylphenol phosphite (ULTRANOX™ 641), bis-(2,6-di-t-butyl-**4-methylphenyl) pentaerythritol diphosphite (PEP 36), tetrakis-(2,4-di-t-butylphenyl) 4,4'-**diphenylene **diphosphonite (P-EPQ), 2,2'-ethylidene bis-(4,6-di-t-**butylphenyl)fluorophosphonite (ETHANOX™ 398), bis-(2,4-di-t-butyl-6-methylphenyl) ethyl phosphite (IRGAFOS™ **38) and 2,2',2''-nitrilotriethanol tris[3,3',5,5'-tetra-tert-butyl-1,1'-biphenyl-2,2'-diyl)-phosphite (IRGAFOS 12), and tris-(2,4-di-t-butylphenyl) phosphite** (DOVERPHOS S-480™). The phosphite antioxidants may be present in sufficient amount to stabilize the polymer matrix against oxidation during the heat processing steps. The phosphite antioxidants may be present in an amount of about 0.01 percent by weight or greater based on the weight of the polyolefin mixture, about 0.02 percent by weight or greater or about 0.04 percent by weight or greater. The phosphite antioxidants may be present in an amount of about 0.3 percent by weight or less based on the weight of the polyolefin mixture, about 0.25 percent by weight or less or about 0.2 percent by weight or less.

The polyolefin mixture may further comprise one or more thioester anti-oxidants. Any alkylthiomethyl phenols, hydroxylated thiodiphenylethers, which decompose hydroperoxide groups by reduction without producing new radicals may be used. Exemplary thioester antioxidants include 2,4-di-octylthiomethyl-6-tert-butylphenol, 2,4-di-octylthiomethyl-6-methylphenol, 2,4-di-octylthiomethyl-6-ethylphenol, 2,6-di-do-decylthio-**methyl-4-nonylphenol, 2,2'-thio-bis-(6-tert-butyl-4-methylphenol), 2,2'-thio-bis-(4-octyl-phenol), 4,4'-thio-bis-(6-tert-butyl-3-methylphenol), 4,4'-thio-bis-(6-tert-butyl-2-methylphenol), 4,4'-thio-bis-(3,6-di-sec.-amylphenol), 4,4'-bis-(2,6-di-methyl-4-hydroxy-phenyl)-**disulphide. The one or more thioester antioxidants are present in sufficient amount to stabilize the polymeric matrix under processing conditions. The thioester antioxidants may be present in an amount of about 0.01 percent by weight or greater based on the weight of the polyolefin mixture, about 0.02 percent by weight or greater or about 0.04 percent by weight or greater. The thioester antioxidants may be present in an amount of about 0.3 percent by weight or less based on the weight of the polyolefin mixture, about 0.25 percent by weight or less and or about 0.2 percent by weight or less.

The polyolefin mixture may comprise one or more volatile acid neutralizers. Volatile as used in this context means that the acid neutralizer volatilizes away from the polymeric matrix when exposed to the conditions of the first oven, for instance at a temperature of about 200 °C and ambient pressure. Any compound that can neutralize acid groups present in the bath from which the polymeric matrix is formed and which exhibits a boiling point below 200°C may be used. The acid neutralizers may contain one or more nitrogen atoms and have a boiling point below 165°C. Exemplary acid neutralizers include ammonia, morpholine, dimethyl ethanol amine and diethyl ethanol amine, monoethanolamine. The one or more acid neutralizers may be present in sufficient amount to neutralize the acid groups in the bath. The acid neutralizers may be present in the polyolefin dispersions in an amount of about 1 percent by weight or greater based on the weight of the polyolefin mixture, about 2 percent by weight or greater or about 3 percent by weight or greater. The acid neutralizers may be present in the polyolefin dispersions in an amount of about 7 percent by weight or less based on the weight of the polyolefin mixture, about 6.0 percent by weight or less or about 5 percent by weight or less.

The polyolefin mixture may comprise one or more additives commonly used in moldable thermoplastic compositions. Exemplary additives include flame retard-ants (such as calcium carbonate, aluminum trihydrate (ATH), and magnesium hydroxide), stabilizers, pigments and dyes, mold release agents, and anti-stat agents fillers, such as organic or inorganic particles, including clays, talc, titanium dioxide, zeolites, powdered metals, organic or inorganic fibers, including carbon fibers, silicon nitride fibers, steel wire or mesh, and nylon or polyester cording, nano-sized particles, clays, and so forth; tacki-fiers, oil extenders, including paraffinic or napthelenic oils; and other natural and synthetic polymers, including other polymers according to embodiments of the present disclosure. The polyolefin mixture may contain organic or inorganic fillers or other additives such as starch, talc, calcium carbonate, polymeric fibers (including nylon, rayon, cotton, polyester, and polyaramide), metal fibers, flakes or particles, expandable layered silicates, phosphates or carbonates, such as clays, mica, silica, alumina, aluminosilicates or alumino-phosphates, carbon whiskers, carbon fibers, nanoparticles including nanotubes, wollas-tonite, graphite, zeolites, and ceramics, such as silicon carbide, silicon nitride or titania. Silane-based or other coupling agents may also be employed for better filler bonding. The polyolefin mixture may contain processing oils, plasticizers, and processing aids. Rubber processing oils having a certain ASTM designation and paraffinic, napthenic or aromatic process oils are all suitable for use. Generally from about 0 to about 150 parts, about 0 to about 100 parts, or about 0 to about 50 parts of processing oils, plasticizers, and/or processing aids per 100 parts of polyolefin mixture may be employed. Where present any such ingredients may be present in an amount of about 1 part by weight or greater. Additional processing aids include conventional waxes, fatty acid salts, such as calcium stearate or zinc stearate, (poly) alcohols including glycols, (poly)alcohol ethers, including glycol ethers, (poly)esters, including (poly)glycol esters, and metal salt-, especially Group 1 or 2 metal or zinc-, salt derivatives thereof. For some applications, carbon black is one additive useful for UV absorption and stabilizing properties.

A second neutralizer may be added to the polyolefin dispersion to neutral-ize carboxylic acid groups contained on polyolefins in the dispersion. Any compound that neutralizes carboxylic acid groups and does not negatively impact the products formed may be utilized. Exemplary secondary neutralizers include alkaline metal hydroxides, alkali metal hydroxides, alkali phosphates, ionomeric moieties, ion exchange compounds, metal carbonates, hydrotalcite like compounds, for instance DHT-4A™ hydrotalcite like compounds, and mixtures thereof. The neutralization of carboxylic acid groups can reduce creep in the parts or articles made with the final composition. As used in this context creep means relaxation under load and time of parts or articles made with the final composition and is measured by stress or strain development at a defined temperature and either constant strain or constant stress. The second neutralizer is present in sufficient amount to reduce creep in the compositions and to aid in the oxidative stability of the polymeric matrix. The second neutralizer may be present in an amount of about 250 ppm by weight or greater based on the weight of the polyolefin mixture, about 500 ppm or greater, about 750 ppm or greater, about 1000 ppm by weight or greater, about 2000 ppm or greater or about 3000 ppm or greater. The second neutralizer may be present in an amount of about 5000 ppm by weight or less, about 4000 ppm or less or about 3500 ppm or less based on the weight of the polyolefin mixture. Relative to the polyolefin composition in the composition that is coated about the fibers the second neutralizer may be present in an amount of about 5 percent by weight or less based on the weight of the polyolefin composition, about 2 percent by weight or less or about 1 percent by weight or less.

The polyolefin dispersion may contain a stabilizing agent to promote the formation of a stable dispersion or emulsion. The stabilizing agent may be a surfactant, a polymer (different from the thermoplastic resin or base polymer detailed above), or mixtures thereof. The resin may be a self-stabilizer, so that an additional exogenous stabilizing agent may not be necessary. A self-stabilizing system may include a partially hydrolyzed polyester, whereby combining such polyester with an aqueous base, a polyester resin and surfactant-like stabilizer molecule may be produced. The stabilizing agent may be used as a dispersant, a surfactant for the frothing of a foam formed from the dispersion, or may serve both purposes. One or more stabilizing agents may be used in combination. The stabilizing agent may be a polar polymer, having a polar group as either a comonomer or grafted monomer. The stabilizing agent may include one or more polar polyolefins, having a polar group as either a comonomer or grafted monomer. Typical polymers include ethylene-acrylic acid (EAA) and ethylene-methacrylic acid copolymers, such as those available under the trademarks PRIMACOR™ (trademark of The Dow Chemical Company), NUCREL™ (trademark of E.I. DuPont de Nemours), and ESCOR™ (trademark of ExxonMobil) and described in U.S. Pat. Nos. 4,599,392, 4,988,781, and 5,938,437, each of which is incorporated herein by reference in its entirety. Other suitable polymers include ethylene ethyl acrylate (EEA) copolymer, ethylene methyl methacrylate (EMMA), and ethylene butyl acrylate (EBA). Other ethylene-carboxylic acid copolymer may also be used. If the polar group of the polymer is acidic or basic in nature, the stabilizing agent polymer may be partially or fully neutralized with a neutralizing agent to form the corresponding salt. Neutralization of the stabilizing agent, such as a long chain fatty acid or EAA, may require from 25 to 200 percent on a molar basis of a neutralizer; or from 50 to 110 percent on a molar basis of a neutralizer. The neutralizing agent may be a base, such as ammonium hydroxide or potassium hydroxide, lithium hydroxide or sodium hydroxide. Those having ordinary skill in the art will appreciate that the selection of an appropriate neutralizing agent depends on the specific composition formulated. The neutralizing agent may be a volatile acid neutralizer as disclosed herein.

Where a polymeric stabilizing agent is used, the polymeric stabilizing agent may have a molecular weight of about 5,000 to about 125,000 or about 5,000 to about 45,000. The polymeric stabilizing agent may have a molecular weight less than half that of the polyolefin resin. Other stabilizing agents that may be used include long chain fatty acids or fatty acid salts having from 12 to 60 carbon atoms or from 12 to 40 carbon atoms. The salts may be alkali metal or ammonium salts of the fatty acid, prepared by neutral-ization of the acid with the corresponding base, e.g., NaOH, KOH, $NH_4OH$ and amines, such as ethanol amine, triethanol amine, and the like. These salts may be formed in situ in the dispersion step. Additional stabilizing agents that may be useful include cationic surfactants, anionic surfactants, or a non-ionic surfactants. Examples of anionic surfactants include sulfonates, carboxylates, and phosphates. Examples of cationic surfactants include quaternary amines. Examples of non-ionic surfactants include block copolymers containing ethylene oxide and silicone surfactants. Surfactants useful as a stabilizing agent maybe either external surfactants or internal surfactants. External surfactants are surfactants that do not become chemically reacted into the polymer during dispersion preparation. Examples of external surfactants useful herein include salts of dodecyl benzene sulfonic acid and lauryl sulfonic acid salt. Internal surfactants are surfactants that do become chemically reacted into the polymer during dispersion preparation. An example of an internal surfactant useful herein includes 2,2-dimethylol propionic acid and its salts.

The dispersing agent or stabilizing agent may be used in an amount ranging from greater than zero to about 60 percent by weight based on the polyolefins mixture used. Long chain fatty acids or salts thereof may be used from 0.5 to 10 percent by weight based on the polyolefin mixture. Ethylene-acrylic acid or ethylene-methacrylic acid copolymers may be used in an amount from 0.5 to 60 percent by weight based on the polyolefin mixture. Sulfonic acid salts may be used in an amount from 0.5 to 10 percent by weight based on the polyolefin mixture.

More than one stabilizing agent may be used, and combinations may be used as a dispersant and as a surfactant, for example. One of ordinary skill in the art will recognize that the stabilizing agent used to create a relatively stable aqueous dispersion of polyolefin resin particles may vary depending on the nature of the polyolefin particles employed. The stabilizing agent used may be the same or different than the frothing surfactant used in the preparation of a froth from the dispersion.

The polyolefins and the dispersion stabilizing agent are preferably dispersed in a liquid medium, which may be water. The polyolefin dispersions comprise water with one or more polyolefins dispersed therein. The polyolefins are preferably in a liquid state in the form of particles dispersed in the bath. The stabilizer functions to support the particles in the water bath. The concentration of polyolefins in water is selected to facilitate coating the fiberous structures with the polymeric matrix and to provide a bath viscosity sufficient to efficiently form the composition of fiberous structures and the polymeric matrix.

The concentration of one or more polyolefins in the water bath is chosen to facilitate coating the fibers of the fiberous structures with the polymeric matrix in an efficient manner. The water bath contains a number of ingredients which are nonvolatile during processing as described herein. Such nonvolatile ingredients can be referred to as solids. The water bath can contain a concentration of solids which facilitates the preparation of the bundles of fibers with the polymeric matrix disposed about and interspersed within the bundles as described herein. Solids include the polyolefins, fillers, functional additives such as antioxidants, secondary neutralizers and pigments and the like. The concentration of solids in the polyolefin dispersion may be about 10 percent by weight or greater of the dispersion, about 15 percent by weight or greater, about 20 percent by weight or greater or about 25 percent by weight or greater. The concentration of the one or more solids in the dispersion may be about 65 percent by weight or less of the dispersion, about 60 percent by weight or less, about 50 percent by weight or less or about 40 percent by weight or less. The concentration of the one or more polyolefins in the dispersion may be about 5 percent by weight or greater, about 10 percent by weight or greater or about 15 percent by weight or greater. The concentration of the one or more polyolefins in the dispersion may be about 65 percent by weight or less, about 60 percent by weight or less or about 55 percent by weight or less. The stabilizer is present in sufficient amount to stabilize the dispersion of the one or more polyolefins in water. The one or more stabilizers may be present in an amount of about 0.5 percent by weight or greater based on the weight of the dispersion, about 1 percent by weight or greater or about 2 percent by weight or greater. The one or more stabilizers may be present in an amount of about 10 percent by weight or less based on the weight of the dispersion, about 8 percent by weight or less or about 6 percent by weight or less. Sufficient base may be added to neutralize the dispersion of polyolefins in water to achieve a pH range of about 6 to about 14 or between about 9 to about 12. Water content of the dispersion may be controlled so that the solids content as described herein is achieved.

The dispersions may include one or more polyolefins, which may include at least one non-polar polyolefin described above, a dispersion stabilizing agent, which may include at least one polar polyolefin, and optionally a filler. With respect to the one or more polyolefins and the dispersion stabilizing agents, at least one non-polar polyolefin may be present in an amount of about 30 percent by weight or greater of the total amount of polymer and dispersion stabilizing agent in the solids in the dispersion or about 50 percent by weight or greater. The at least one non-polar polyolefin may comprise about 99 percent by weight or less of the total amount of polymer and dispersion stabilizing agent in the solids in the dispersion, about 80 percent by weight or less, or about 70 percent by weight or less. With respect to the filler, typically, an amount greater than about 0 to about 1000 parts per hundred of the combined amount of the one or more polyolefins and dispersion stabilizing agent may be used, between about 50 to 250 parts per hundred, between about 10 to 500 parts per hundred, between about 20 to 400 parts per hundred; or between about 0 to about 200 parts per hundred.

The materials present in water in the polyolefin dispersion may comprise about 15 to about 30 percent by weight of the non-water components of a functional polyolefin which is a polyolefin having hydrophilic moieties grafted to the polyolefin, for example a low density polyethylene having acrylic acid groups grafted thereon; about 2 to about 15 percent by weight of a functional polyolefin which exhibits high melt flow rates, for example a polypropylene wax having maleic anhydride grafted thereto; about 50 to about 80 percent by weight of a non-functional (non-polar) polyolefin which can be a polypropylene homopolymer or copolymer, the copolymer can be a random copolymer or impact copolymer polypropylene which may have a melt flow rate of about 20 to about 50 and an elongation at break of about 10 to 20 percent according to test method ASTM D1238-88. The polyolefin mixture portion of the polymeric matrix formed may contain a similar compositional make up except the levels of neutralizer may be as disclosed after treatment in one or more ovens of the fibrous structures with the polymeric matrix coated thereon.

The water bath is maintained at a temperature at which the one or more polyolefins are in a molten or liquid state so as to facilitate dispersion of particles of the one or more polyolefins in water. Typically the bath is maintained at ambient temperatures, of about 18 °C or greater or about 20 °C or greater. The bath may be maintained at a temperature of about 30 °C or less or about 25 °C or less. Other bath temperatures may be used. The particles of the one or more polyolefins in the water bath are of a size sufficient to facilitate efficient formation of the polymeric matrix about the fibers. As used herein particle size which is the volume-mean particle size. Particle size may be measured by laser diffraction techniques. A particle size in this description refers to the diameter of the polymers in the dispersion. For polymer particles that are not spherical, the diameter of the particle is the average of the long and short axis of the particle. Particle sizes can be measured on a Beckman-Coulter LS230 laser-diffraction particle size analyzer. The volume average size of the particles may be about 500 microns of less, 100 microns or less, 10 microns or less, about 5 microns or less, or about 4 microns or less,. The volume average size of the particles may be about 100 nanometers or more, about 200 nanometers or more, about 500 nanometers or more, most preferably about 1 microns or more. The dispersion used in the method of the present invention preferably has a volume average particle size of less than about 5 micrometers, a pH of less than 12. The dispersions may optionally include a filler wetting agent. A filler wetting agent generally may help make the filler and the polyolefin dispersion more compatible. Useful wetting agents include phosphate salts, such as sodium hexametaphosphate. A filler wetting agent can be included in a composition of the present invention at a concen-tration of at least about 0.5 part per 100 parts of filler, by weight. The dispersion may optionally include a thickener. Thickeners may be useful to increase the viscosity of low viscosity dispersions. Thickeners suitable for use may be any known in the art such as for instance polyacrylate type or associate non-ionic thickeners such as modified cellulose ethers. Exemplary thickeners include ALCOGUM™ VEP-II (tradename of Alco Chemical Corporation), RHEOVIS™ and VISCALEX™ (tradenames of Ciba Ceigy), UCAR ® Thickener 146, or ETHOCELL™ or METHOCELL™(tradenames of the Dow Chemical Company) and PARAGUM™ 241 (trade name of Para-Chem Southern, Inc.), or BERMACOL™ (trademark of Akzo Nobel) or AQUALON™ (trademark of Hercules) or ACUSOL® (trademark of Rohm and Haas). Thickeners may be used in any amount necessary to prepare a dispersion of desired viscosity. The viscosity of the dispersion is controllable. Addition of the thickener to the dispersion including the amount of filler may be performed with conventional means to result in viscosities as needed.

The polyolefin dispersions may be characterized by their stability when a filler is added to the polyolefin / dispersion stabilizing agent mixture. Stability refers to the stability of viscosity of the resultant aqueous polyolefin dispersion. In order to test the stability, the viscosity is measured over a period of time. The viscosity may be measured at 20 °C should remain +/- 10% of the original viscosity over a period of 24 hours, when stored at ambient temperature.

The bath can be prepared by contacting the ingredients with agitation or milling in a heated vessel, for instance in a batch process. The one or more polyolefins and a dispersion stabilizing agent are melt-kneaded in an extruder along with water and a neutralizing agent to form a dispersion. A filler may be added during or after blending the one or more polyolefins and dispersion stabilizing agent.

The composition that is utilized to coat fibers of the fibrous structures is a mixture of the copolymer lattices and the polyolefin dispersions. The mixture may contain any mixture of the two components that facilitates coating of the fibers in the fibrous structures, further coating of the fibrous structures with thermoplastic compositions and/or dispersal of fibers into another thermoplastic composition. The composition containing a mixture of the copolymer lattices and the polyolefin dispersions may contain about 25 percent by weight or greater of the copolymer lattices, 35 percent by weight or greater of the copolymer lattices, or about 45 percent by weight or greater of the copolymer lattices. The composition containing a mixture of the copolymer lattices and the polyolefin dispersions may contain about 75 percent by weight or less of the copolymer lattices, 65 percent by weight or less of the copolymer lattices, or about 55 percent by weight or less of the copolymer lattices. The composition containing a mixture of the copolymer lattices and the polyolefin dispersions may contain about 25 percent by weight or greater of the polyolefin dispersions, 35 percent by weight or greater of the polyolefin dispersions, or about 45 percent by weight or greater of the polyolefin dispersions. The composition containing a mixture of the copolymer lattices and the polyolefin dispersions may contain about 75 percent by weight or less of the polyolefin dispersions, 65 percent by weight or less of the polyolefin dispersions, or about 55 percent by weight or less of the polyolefin dispersions. The polyolefins and the dispersion stabilizing agent are preferably dispersed in a liquid medium, which may be water. The bath comprises water with one or more poly-olefins dispersed therein. The polyolefins are preferably in a liquid state in the form of particles dispersed in the bath. The stabilizer functions to support the particles in the water bath. The concentration of polyolefins in water is selected to facilitate dispersing the poly-meric matrix between the fibers of a bundle and to coat the polymeric matrix on the surface of the fibers or the bundle of fibers and to provide a bath viscosity sufficient to efficiently form the composition of fibers and the polymeric matrix.

The mixture of the copolymer lattices and the polyolefin dispersions can be formed by standard mixing processes. Preferred mixing processes include mixing under high sheer in a high sheer mixing device. Conventional batch mixing with proper agitator design can be used. The mixing can take place at ambient temperatures and pressures.

The viscosity of the bath may be about 20 centipoise (mPa.s) or greater, about 50 centipoise (mPa.s) or greater or about 140 centipoise (mPa.s) or greater. The viscosity of the bath may be about 300 centipoise (mPa.s) or less, about 200 centipoise (mPa.s) or less or preferably about 160 centipoise (mPa.s) or less. Below about 20 centipoise the fiber content in the resulting coated fiberous structures may be too high. Above 300 centipoise the fiber content may be too low. Viscosity can be adjusted by adding one or more of additional copolymers, polyolefins, fillers or thickening agents.

After coating of the fibrous structures in the bath and drying the fibrous structures in the ovens a polymeric matrix is coated on the surfaces of the fibers. The polymeric matrix comprises a mixture of the copolymer lattices and a polyolefin mixture containing one or more polyolefins. The relative amount of each component is chosen such that the mixture facilitates coating of the fibers in the fibrous structures, further coating of the fibrous structures with thermoplastic compositions and/or dispersal of fibers into another thermoplastic composition. The polymeric matrix may comprise about 25 percent by weight or greater of the copolymer lattices, 35 percent by weight or greater of the copolymer lattices, or about 45 percent by weight or greater of the copolymer lattices. The polymeric matrix may comprise about 75 percent by weight or less of the copolymer lattices, 65 percent by weight or less of the copolymer lattices, or about 55 percent by weight or less of the copolymer lattices. The polymeric matrix may comprise about 25 percent by weight or greater of the polyolefin mixture containing one or more polyolefins, 35 percent by weight or greater of the polyolefin mixture containing one or more polyolefins, or about 45 percent by weight or greater of the polyolefin mixture containing one or more polyolefins. The polymeric matrix may contain about 75 percent by weight or less of the polyolefin mixture containing one or more polyolefins, 65 percent by weight or less of the polyolefin mixture containing one or more polyolefins, or about 55 percent by weight or less of the polyolefin dispersions. The formed fibrous structures have 90 percent or greater of the surfaces of the fibers coated with the polymeric matrix, about 95 percent or greater of the surfaces coated, about 99 percent or greater of the surfaces coated or about 100 percent of the surfaces coating with the polymeric matrix.

The compositions disclosed herein contain fibrous containing structures. The fibrous containing structures may be any such structures that can be coated in the coating baths containing the mixture of mixture of the copolymer lattices and the polyolefin dispersions. The fibrous structures may be rovings, bundled of fibers, woven structures based on fibers, nonvoven structures containing fibers, woven structures from various tow rovings, structures of woven fibers of dissimilar composition, and the like. Fibers and fibrous structures are used to enhance the properties of structures prepared from the compositions. Any fibers and fibrous structures that improve the properties of structures made utilizing the fibers or fibrous structures may be used in the compositions. Fibers or fibrous structures may be utilized to improve one or more of the following properties: impact resistance, as demonstrated by notched Izod; modulus, as demonstrated by tensile modulus and flex modulus; tensile strength; improved creep resistance as determined by test method ASTM D2990 and the like. Fibrous structures may be used to as a matrix for a number of structures or as reinforcement structures in a number of applications, and the like. Exemplary fibers useful in the fibrous structures disclosed include glass fibers, carbon fibers, metal based fibers, polymeric fibers, mixtures thereof and the like. Exemplary metal based fibers include stainless steel, and the like. Exemplary polymeric fibers include aramide, polyamide fibers, polyester fibers, cellulose ether fibers, polyolefin fibers, natural fibers, combinations thereof, and the like. This disclosure contemplates the use of a mixture of types of fibers, for instance glass and stainless steel fibers or glass fibers and carbon fibers. The fibers may be glass and polymeric fibers. The fibers may be glass fibers. The fibrous containing structures disclosed may be utilized as concentrates containing high levels of fibers which are adapted to be mixed with other polyolefins that do not contain fibers. The concentrates containing fibers are typically blended with other polyolefins in ratios so as to prepare final structures having the concentration of fibers which provide the desired enhanced properties of the resulting structures. Concentrates with higher concentrations of fibers are desired to promote efficient blending of the concentrates with other polyolefin compositions. The one or more fibers are present in the concentrates in a sufficient amount to enhance the properties of the final structures prepared using the concentrates and to efficiently disperse the fibers throughout the final structure. The fibers are present in an amount of about 60 percent by weight or greater based on the weight of the concentrate, more preferably about 75 percent by weight or greater and most preferably about 80 percent by weight or greater. The fibers are present in an amount of about 95 percent by weight or less based on the weight of the composition, more preferably about 90 percent by weight or less and most preferably about 88 percent by weight or less. Concentrate refers to the structures of bundles of fibers and polymeric matrix formed as disclosed herein.

The fibers may be any dimensions or combination of dimensions that provide the desired enhanced properties in the final structures containing the polyolefins and fibers. Among the dimensions that impact the desired properties is the length. The fibers may be provided in long strands that are passed through the process steps as disclosed herein. The fibers with the polymeric matrix dispersed about and between the fibers are cut at the end of the process. The length of the fibers is based on the desired final use. The concentrates may be formed into pellets. The fibers extend the length of the pellets in the processing direction, which is the direction that fibers are passed through the process. The fibers may have a length of about 3 mm or greater or about 6 mm or greater. The fibers have a length of about 50 mm or less, about 30 mm or less or about 13 mm or less. Longer fibers may improve the creep resistance of the ultimate structures prepared from the structures of the disclosure.

The compositions disclosed may be elongated structures of the fibers with the polymeric matrix on the fibers. The fibers may be provided in bundles of fibers from a spool (bobbin or creel). The elongated structures may comprise one or more bundles of fibers shaped into a shape transverse to the processing direction. The particular length is chosen for the particular application and the fibers continue through structure transverse to direction of the shape. Exemplary shapes of the structures include rods, tapes, ducts, tubes, profiles, and the like. The structures have a cross-sectional shape, which is transverse to the processing direction. The cross sectional shape may be any shape suitable for the use of the structures, for example round, oval, square, polygonal (triangular, rectangular, pentagonal, hexagonal, octagonal and the like) and the like. The shape may have elongated flat opposing sides and rounded edges or sides. The shape may be irregular.

The fibers may be provided in bundles of elongated fibers typically called rovings which are delivered on spools. The measure Tex is a unit measure for the linear mass of density of fibers and is defined as the mass in grams per 100 meters. When measuring objects that consist of multiple fibers, the term "filament tex" is sometimes used, referring to the mass in grams per 1000 meters of a single filament. One can calculate the diameter of a filament yarn using tex with the following formula:

$$\text{Diameter} = \sqrt{\frac{\text{Tex}}{1000 \cdot \text{density} \cdot 0.7855}}$$

with density in grams per cubic centimeter and diameter in millimeters. The bundles of fibers exhibit tex of 500 or greater, about 1000 or greater or about 1200 or greater. The bundles of fibers exhibit tex of 4000 or less, about 3600 or less or about 1400 or less.

The fibers or bundles of fibers may contain coatings to enhance bonding of the fibers to the polymeric matrix. It may be desirable to match the coating to the polymeric matrix. Such coatings are sometimes referred to as sizing. Known coating or sizing compositions may be used on the fibers or bundles of fibers. For glass fibers the sizing may be an alkyl silane having a reactive group. As used herein silane refers to the group -Si-$(OR)_a(R)_b$ wherein R is separately in each occurrence lower alkyl, a is 1 to 3 and b is 3 - a. The alkyl group for the alkyl silane is a lower alkyl, such as ethyl, propyl or butyl. Exemplary reactive functional groups include amino styryl, aromatic, vinyl, glycidyl (epoxy), mercapto, cyanoacrylate, and the like, with amino and glycidyl being preferred. The amount of coating or sizing on the fibers or bundle of fibers is an amount such that the bond between the polymeric matrix and the fibers is enhanced. The sizing is present in an amount of about 0.25 percent by weight or greater based on the weight of the fibers and the sizing, or about 1.0 percent by weight or greater. The sizing is present in an amount of about 3.5 percent by weight or less based on the weight of the fibers and the sizing or about 2.2 percent by weight or less. The fiber suppliers generally provide the fibers or bundles of fibers with the coating or sizing pre-applied. Alternatively the fibers or bundles of fibers can be coated with the coating or sizing by passing the fibers through a bath containing the coating or sizing under conditions such that the coating or sizing is applied to the surface of the fibers. The sizing on the bundles of fibers may be removed. The sizing can inhibit adhesion between the polymeric matrix and the fibers. The sizing can be removed by passing the bundles of fibers thought a high temperature oven, for example at 650 °C or greater, or through a highly basic bath, for instance a bath of NaOH.

The fibrous structures can be granular with a defined length, woven, nonwoven, or a combination of these structures. These structures may contain sizing as described herein. The structures can be in any size or shape that can be passed through a bath as described herein. The structures may be in sheet form, in tube form, in rod form, in tape form, or as simple as a single roving fiber bundle form and the like. Continuous forms of the structures can be passed through the bath and other processing steps. The fibrous structures can be used as coated with the polymeric matrix. The fibrous structures coated with the polymeric matrix can have one or more surfaces further coated with one or more of the thermoplastic compositions disclosed herein. The coating can be performed using a known calendaring process, applying a polymeric material in powder form, in molten form, by spraying, or in a solution or dispersion to the fibrous structures and performing one or more of the following operations, solvent removal, heating, applying pressure to coat the polymeric material on the structures, and the like. The fibrous structures coated with the polymeric matrix can be processed to make structures having 3 dimensional shapes using dies and presses, thermoforming processes, hot folding processes, hot bending processes and the like. The fibrous structures coated with the polymeric matrix and optionally having one or more surfaces coated with one or more thermoplastic compositions exhibit the following advantaged properties: high structural performance and superior strength in the fiber direction(s) at lower weight and thickness of the structure and the like.

The composition comprising the polymeric matrix and the fibrous structures is prepared by passing the fibrous structures through a bath comprising a mixture of the lattices of copolymers and the polyolefin dispersions; removing water in the polymeric matrix and on the fibrous structures with the polymeric matrix disposed thereon upon their exiting the bath. Any means of removing water may be used. Water may be removed by passing the fibrous structures and the polymeric matrix through an oven. In addition to or in the alternative the fibrous structures with the polymeric matrix disposed thereon can be passed through a flowing gas or a vacuum to enhance removal of the water. In some embodiments the flowing gas or vacuum can be present in the oven. After exiting the oven the fibrous structures with the polymeric matrix coated thereon may be cut to a desired length.

The fibrous structures are passed through the bath for a sufficient time to prepare a composition containing the desired amounts of fibrous structures and the polymeric matrix. It is desired to achieve this concentration as quickly as possible. Residence time can be expressed in the speed of the fibrous structures through the bath, for instance expressed as meters per minute through the bath. The speed of the fibrous structures through the water bath is about 0.5 meters per minute or greater, about 0.75 meters per minute or greater or about 1.0 meters per minute or greater. The speed of the fibers through the water bath is about 40.0 meters per minute or less, about 25 meters per minute or less or about 10 meters per minute or less. The length of the path of the fibrous structures through the bath can be adjusted. The length of the path of the fiberous structures through the bath may be about 1 cm or greater, about 4 cm or greater or about 6 cm or greater. The length of the path of the fibers through the bath may be about 80 cm or less, about 50 cm or less or about 30 cm or less.

After exiting the bath the fibrous structures with the polymer matrix coated on the fibers is passed through an oven to remove residual water and the volatile acid neutralizers and to sinter and/or melt the polymeric matrix so as to enhance the coating of the polymeric matrix on the fibers. The conditions of the oven are chosen to achieve removal of water and other volatile components including the acid neutralization agents, the coating of the polymeric matrix on the fibers, and sintering of the polymeric matrix about the fibers. The water content after passing the fibrous structure and polymeric matrix through the oven is at a level that does not interfere with further processing of the fibrous structures and polymeric matrix and which does not negatively impact the properties of structures prepared from the fibrous structures and polymeric matrix. The water content may be about 0.15 percent by weight or less, about 0.05 percent by weight or less or about 0.01 percent by weight or less. The acid neutralizer may be removed during this process. The acid neutralizer is removed to a level such that the resulting fibrous structures and polymeric matrix does not exhibit significant odor in further processing. The concentration of acid neutralizer in the fibrous structures and polymeric matrix may be about 0.05 percent by weight or less, about 0.02 percent by weight or less or about 0.005 percent by weight or less. The oven is set at a temperature such that the volatile components are removed in an efficient manner. The temperature of the oven may be about 150 °C or greater, about 165 °C or greater or about 185 °C or greater. The temperature may be about 350 °C or less, about 300 °C or less or about 280 °C or less. The residence time of the fibrous structures in the oven is dependent upon the temperature of the oven, the presence of flowing gas or vacuum and the length of the oven. The residence time in the oven, taking this into consideration, is selected to achieve the desired level volatile components. The residence time in the oven may be about 10 seconds or greater, about 20 seconds or greater or about 30 seconds or greater. The residence time in the oven may be about 300 seconds or less, about 250 seconds or less or about 200 seconds or less.

The oven may also be run under conditions so as enhance the removal of volatile components from the vicinity of the fibrous structures and polymeric matrix. Any such conditions that enhance the removal of volatile components from the vicinity of the fibrous structures and polymeric matrix may be used. Exemplary conditions include flowing a gas over the fibrous structures, such as air or an inert gas, such as nitrogen, argon and the like; applying a vacuum to the oven; and the like. It may be desirable to pass an inert gas through the oven so as to remove volatile components and to significantly reduce the oxygen concentration in the oven to reduce the susceptibility of oxidizing the polymeric components that are on the fibers.

The oven may have two or more different sections or the fibrous structures can be passed through two ovens in sequence. The first oven section or oven can serve the primary function of removing water from the fibrous structures as quickly as possible. The second and subsequent ovens or oven sections primarily function to sinter the strands so as to enhance bond strength between the fibers and the polymeric matrix. The first oven or oven section can utilize higher temperatures for the purpose of removing water as quickly as possible. The subsequent ovens or oven sections may operate at lower temperatures with drier air to reduce oxidation of the polymeric matrix. The subsequent oven sections may have lower moisture and/or oxygen content than the first oven or oven sections. The subsequent ovens or oven sections may have reduced oxygen. Oxygen can be reduced by adding inert gas to the atmosphere of these ovens. The ovens or sections of ovens can have little or no oxygen, for example 1 percent by volume or less or 0.5 percent by volume or less.

After exiting the oven the fibrous structures are cooled so as to allow the polymer matrix to solidify and cut to a desired length as discussed hereinbefore. Cooling may be achieved by any know processes for cooling. Exemplary cooling processes include exposure to ambient temperatures, reduced temperatures, flowing a gas at ambient or below ambient temperatures over the fibrous structures, open air cooling over some path length, and the like. Cutting may be achieved by any method known in the art. The fibrous structures may cut in the direction transverse to processing, the direction transverse to passing them through the bath. Exemplary cutting processes include cutting using rotary cutter devices, rotary needle knife push through type devices, or guillotine type devicesPrior to entering the oven a plurality of the fibrous structures, for example bundles of fibers, and polymeric matrixes may be shaped into a shape in the direction transverse to the processing direction. The plurality of fibrous structures may be passed through a die of the desired shape. As the polymeric matrix is still in a molten or partially molten state upon exit from the bath and therefore as the fibrous structures are passed through a die, the structures passed through the die are fused in the desired shape by the polymeric matrix as they exit the die. The shape can be any desired shape as disclosed herein. The shaped products can be cooled after exiting the die or passed directly into the oven as disclosed hereinafter. Such shaped products can be used for a variety of specialized applications for instance, as reinforcement structures, conduits for cables, tapes for in-mould reinforcing of moulded goods, tubes, single or multi strand rods for cast moulding processes, used as fibrous concentrate in systems with dilution polymers and compounds and the like. Where the fiberous structures are in sheet form the sheets may be cut in a direction transverse to the processing direction on line and thereafter cut into a desired shape for further processing.

Alternatively, the fibrous structure may be further processed prior to cutting to the desired length so the fibrous structures and polymeric matrix can be subjected to any process to enhance their use in downstream processes. The fibrous structures having the polymeric matrix coated about the fiber, which may shaped as disclosed hereinbefore, may be processed to apply one or more components about the fibrous structures. The one or more components can be any component that enables the use of the fibrous structures in downstream processing. Exemplary coating materials include one or more thermoplastic polymers, for example one or more of the polyolefin, a different thermoplastic polymer, or one or more different polyolefins, fillers, stabilizer, and other functional polymer bound packages and masterbatches, and the like. The component may be one or more of the previously applied polyolefins. The component may be one or more different polyolefins. A different polyolefin can impart additional properties or performance characteristics as desired for an end use application. The component may be one or more high melt flow rate polyolefins or a polyolefin prepared using metallocene catalysts, for example polyolefins prepared using metallocene catalysts wherein the polyolefins exhibit high melt flow rates as disclosed herein. Where the fibrous structure are bundles of fibers, the bundles of fibers can be cut into pellets and used to introduce the fibers into non fiber containing polyolefins. This is typically achieved by blending and mixing the pellets with fibers with pellets that do not contain fibers to achieve the desired concentration of fibers suitable for the desired end use. The blending can be performed in an extruder. Alternatively the fiber bundles with polymeric matrices having a high melt flow rate polyolefin coated thereabout can contain a sufficient amount of the high melt flow rate polyolefin such that pellets thereof can be used in a downstream use to provide the desired fiber concentration without further blending with non-fiber containing polyolefins. The high melt flow rate polyolefins coated about the bundles of fibers can have any melt flow rate that enhances the blending of pellets formed from the bundles of fibers and polymeric matrix with non-fiber containing thermoplastic materials or which allows formation of pellets that can be used in an end use without further blending with polyolefins not containing fibers. The high melt flow rate polyolefin exhibits a melt flow rate, as measured by Melt Flow Rate according to test method ASTM D1238-88, of about 70 or greater, about 100 or greater or about 500 or greater. The high melt flow rate polyolefin may exhibit a melt flow rate of about 1500 or less, about 1200 or about 1,000 or less. Exemplary high melt flow rate polyolefins include uncracked polyolefins, polyolefins prepared using metallocene catalysts and the like. The high melt flow rate polyolefin is applied in sufficient amount to enhance further processing as discussed herein, and may comprise other additives or functional ingredients and other polymers to further enhance the performance of the final compositions. The coated fiber bundles may contain about 10 percent by weight or greater of a thermoplastic composition, one or more polyolefins, based on the weight of the polymeric matrix, the bundles of fibers and the thermoplastic composition; about 20 percent by weight or greater, or about 30 percent by weight or greater. The coated fiber bundles may contain about 80 percent by weight or less of a thermoplastic composition, one or more polyolefins, based on the weight of the polymeric matrix, the bundles of fibers and the thermoplastic composition; about 70 percent by weight or less, or about 60 percent by weight or less. The amount of bundles of fibers and the polymeric matrix can be about 15 percent by weight or greater based on the weight of the polymeric matrix, the bundles of fibers and the thermoplastic composition; about 20 percent by weight or greater, or about 25 percent by weight or greater. The amount of bundles of fibers and the polymeric matrix can be about 80 percent by weight or less based on the weight of the polymeric matrix, the bundles of fibers and the thermoplastic composition; about 75 percent by weight or less, or about 70 percent by weight or less. Fibrous structures having different structures may be modified in the same manner.

Additional components may be applied to the fibrous structures and polymeric matrix using any process that allows coating of the fibrous structures with an additional component. Exemplary processes include wire coating, calendaring, spraying, dipping, dusting and the like. The additional component may be applied in a molten state. The fibrous structures may include combinations of different fiber types and sources. After applying the additional component the fibrous structures and polymeric matrix may be passed through an oven to agglomerate, homogenize, convert, crosslink, heat treat, dry the applied component and the like. An oven as described hereinbefore can be used. Further treatment steps may be combined into the oven step or separated from it and include e-beam, UV treatment, corona treatment or plasma treatment or a combination of such treatments prior final use of the fibrous structures and polymeric matrix and any components applied onto them.

The bundles of fibers and polymeric matrices in the form of pellets can be used to introduce the fibers into thermoplastic compositions by blending as disclosed herein. The formed blends can be used to prepare a number of useful structures by any process typically utilized to form structures from thermoplastic compositions. Exemplary processes include, injection molding, compression molding, blow molding, rotomolding, cast molding, sheet molding, casting with thermosets and the like. In some embodiments pellets having a thermoplastic composition about the bundles of fibers and the polymeric matrix may be processed without blending with other polyolefins in such processes. In some embodiments pellets having a thermoplastic composition about the bundles of fibers and the polymeric matrix are blended with other thermoplastics and enhance to processing of the blend or the properties of the structures prepared. Exemplary structures formed include interior and exterior car parts such as door carrier plates, front end carriers, lift gates, instrument panel carriers, shrouds and fans, consoles, roof trim, and the like.

Tapes, rods or sheets of the bundles of fibers and the polymeric matrix can be used to reinforce a number of structures by adhering them by melt bonding, inlay molding, or adhesives to structures. Exemplary structures include car seats, front end carriers, door panels, bonnets, rear hatch, lift gates, under body panels, cowls, instrument panel carriers, and in any application that benefits from localized reinforcements. The compositions can be used as components structures such as those disclosed herein.

The aqueous dispersions may further comprise common ingredients such as other conventional additives. These include, but are not limited to, fillers, flame retardants (such as calcium carbonate, aluminum trihydrate (ATH), and magnesium hydroxide), stabilizers, pigments and dyes, mold release agents, and anti-stat agents. Other polymer or cellulosic based fiber compositions may be used in combination with the glass fibers. Additives may be combined with the dispersion, or with the thermoplastic resins, stabilizing agents, or fillers used in the dispersion. For example, additives may include a wetting agent, coalescing agent, fire retardants, surfactants, anti-static agents, antifoam agent, anti block, wax-based dispersion, pigments, a neutralizing agent, a thickener, a compatibilizer, a brightener, a rheology modifier, a biocide, a fungicide, reinforcing fibers, and other additives known to those skilled in the art. While optional for purposes of the present invention, other components may be highly advantageous for product stability during and after the manufacturing process.

The compositions may be used to prepare compositions with any targeted fiber content, typically 20%, 30% and 40% are common concentrations of fibers in the final application but this can vary. Molded products prepared to a final composition with 30% glass fiber content using pellets containing bundles of glass fibers in a polyolefin matrix exhibit a variety of advantageous properties. The molded products demonstrate excellent tensile strengths, as measured according to ISO R527 or ASTM D638 it is expected that both tests would yield consistent results, and preferably exhibit a tensile strength of about 80 MPa or greater, more preferably about 85 MPa or greater, and most preferably about 90 MPa or greater. The molded products demonstrate excellent tensile elongation at break as measured according to ISO R527 or ASTM D638 and preferably exhibit a tensile elongation at break of about 1 percent or greater, more preferably about 1.5 or greater, and most preferably about 1.8 percent or greater. The molded products demonstrate excellent notched Izod performance as measured according to ASTM D256 and preferably exhibit a notched Izod of about 10 $KJ/m^2$ or greater, more preferably about 20 $KJ/m^2$ or greater, and most preferably about 25 $KJ/m^2$ or greater. Pellets of bundles of glass fibers in a polyolefin matrix prepared according to the process of the disclosure exhibit low fuzz or fibers protruding from the pellets. In addition such pellets are capable of being processed in high efficiency processing equipment, for instance can be conveyed by air.

Fiberous structures in the form of sheet may be used to prepare the reinforcement basis for compression moulded panels that may after shaping be overmoulded with natural of compounded polymer compositions or local reinforcement as inlay in (over)moulded goods and the like. Such products may have the following advantageous properties local or part wide benefit of the reinforcement mechanical property such as flexural modulus and strength, impact performance, and the like.

The compositions comprising a) a latex containing a co-polymer containing the residue of one or more monomers of one or more ethylenically unsaturated aromatic monomers, one or more alkadienes, and one or more (meth) acrylates; and b) a polyolefin dispersion containing one or more polyolefins disclosed herein may further comprise any one or more of the features described in this specification in any combination, including the preferences and examples listed in this specification, and includes the following features: the polyolefin dispersion comprises a dispersant and comprising one or more polyolefins, one or more hindered phenol antioxidants, one or more phosphite antioxidants and one or more acid neutralizers; the polymer particles in the latex have a particle size of about 20 nanometers to about 700 nanometers; and the polymer particles in the dispersion have a particle size of about 100 nanometers to about 500 microns; the latex is based on a copolymer of one or more ethylenically unsaturated aromatic monomers and one or more (meth)acrylates, one or more ethylenically unsaturated aromatic monomers and one or more alkadienes, one or more methylmethacrylates and one or more alkadienes, or one or more alkyl methacrylates and one or more acrylates; or mixtures thereof; the copolymer of the latex contains one or more unsaturated carboxylic acids; the one or more unsaturated carboxylic acids are acrylic acid, methacrylic acid, itaconic acid, fumaric or maleic acid, or mixtures thereof; the copolymer of the latex contains a hydroxyl alkyl acrylate; which comprises: a) from about 35 to about 60 percent by weight of the latex containing a co-polymer containing the residue of one or more one or more ethylenically unsaturated aromatic monomers, one or more alkadienes, and one or more (meth) acrylates; and b) from about 35 to about 60 percent of the polyolefin dispersion containing one or more polyolefins; which comprises: a) from about 45 to about 55 percent by weight of the latex containing a co-polymer containing the residue of one or more one or more ethylenically unsaturated aromatic monomers, one or more alkadienes, and one or more (meth) acrylates; and b) from about 45 to about 55 percent of the polyolefin dispersion containing one or more polyolefins; the latex is a copolymer of styrene, butyl acrylate and one or more of acrylic and methacrylic acid; the latex is a copolymer of styrene, butyl acrylate, one or more of acrylic and methacrylic acid and a hydroxyl alkyl acrylate; the acid neutralizer comprises one or more volatile nitrogen containing compounds; the polyolefin composition of the polyolefin dispersion includes one or more thioester antioxidants; the polymeric particles of the polyolefin dispersion includes one or more polyolefins with maleic anhydride or a hydrolysis product thereof grafted to the backbone; the one or more polyolefins with maleic anhydride or a hydrolysis product thereof grafted to the backbone exhibits a weight average molecular weight of about 20,000 to about 40,000 Daltons and contain about 0.5 to about 3.5 percent by weight of maleic anhydride or a hydrolysis product thereof; the polymeric particles of the polyolefin dispersion contain from about 5 to about 15 percent by weight of one or more polyolefins with maleic anhydride or a hydrolysis product thereof grafted to the backbone; the polyolefin composition of the polyolefin dispersion comprises: from about 95.7 to about 99.96 percent by weight of one or more polyolefins; from about 0.01 to about 1.0 percent by weight of one or more hindered phenol antioxidants; from about 0.01 to about 0.1 percent by weight of one or more phosphite antioxidants; from about 0.01 to about 0.2 percent by weight of one or more thioester antioxidants; and from about 0.01 to about 3.0 percent by weight of one or more acid neutralizers; the polyolefin dispersion contains one or more secondary neutralizers selected from alkaline metal hydroxides, alkali metal hydroxides, alkali phosphates, ionomeric moieties, ion exchange compounds, metal carbonates, and hydrotalcite like compounds; a) the latex containing a co-polymer has a solids content of about 25 to about 70 percent by weight; and b) the polyolefin dispersion polymer has a solids content of about 25 to about 65 percent by weight; the copolymer in the latex comprises: from about 20 to about 80 percent by weight of one or more ethylenically unsaturated aromatic monomers; from about 20 to about 80 percent by weight of one or more of one or more (meth)acrylates and one or more alkadienes; and, from about 0.5 to about 20 percent by weight of one or more unsaturated carboxylic acids; and the copolymer in the latex contains from about 1 to about 15 of one or more hydroxyl alkyl acrylates.

The compositions comprising a polymeric matrix comprising a) a co-polymer containing the residue of one or more monomers of one or more ethylenically unsaturated aromatic monomers, one or more alkadienes, and one or more (meth) acrylates; and b) a polyolefin composition containing one or more polyolefins disclosed herein may further comprise any one or more of the features described in this specification in any combination, including the preferences and examples listed in this specification, and includes the following features: a polymeric matrix derived from polymeric particles of a mixture of one or more polyolefins, one or more hindered phenol antioxidants, one or more phosphite antioxidants and one or more acid neutralizers; and polymeric particles of one or more copolymers containing the residue of one or more monomers of one or more ethylenically unsaturated aromatic monomers, one or more alkadienes, and one or more (meth) acrylates; bundles, woven structures or non-woven structures of fibers; wherein the one or more bundles, woven structures or non-woven structures of fibers have the polymeric matrix coated on about 90 percent of the surface area of the fibers in the one or more bundles, woven structures or non-woven structures; a plurality of bundles of fibers wherein the bundles of fibers are oriented in one direction and are bonded together such that the bonded together bundles exhibit a consistent shape transverse to the direction of orientation; the composition comprises about 20 to about 95 percent by weight of fibers and preferably about 75 to about 91 percent by weight of fibers; the one or more bundles, woven structures or nonwoven structures of fibers having a polymeric matrix coated on the fibers have coated about the structures a thermoplastic composition; the thermoplastic composition coated about the one or more bundles, woven structures or nonwoven structures of fibers comprises a polyolefin having a melt flow rate of 70 or greater which is uncracked or prepared using metallocene catalysts; the polymeric matrix comprises: a) from about 25 to about 75 percent by weight of the co-polymer containing the residue of one or more one or more monomers of one or more ethylenically unsaturated aromatic monomers, one or more alkadienes, and one or more (meth) acrylates; and b) from about 25 to about 75 percent by weight of a polyolefin composition derived from the polymer particles containing one or more polyolefins; the a) the co-polymer containing the residue of one or more one or more monomers of one or more ethylenically unsaturated aromatic monomers, one or more alkadienes, and one or more (meth) acrylates is derived from polymer particles in the latex have a particle size in the nanometer range; and b) the polyolefin composition is derived from polymer particles having a particle size in the micron range; the polyolefin composition comprises one or more polyolefins, one or more hindered phenol antioxidants, one or more phosphite antioxidants and one or more acid neutralizers; the co-polymer containing the residue of one or more monomers of one or more monomers of one or more ethylenically unsaturated aromatic monomers, one or more alkadienes, and one or more (meth) acrylates is derived from particles having a size of about 20 nanometers to about 700 nanometers; and the polyolefin composition is derived from polymer particles having a particle size of about 100 nanometers to about 10 microns; the copolymer comprises of one or more ethylenically unsaturated aromatic monomers and one or more (meth)acrylates, one or more ethylenically unsaturated aromatic monomers and one or more alkadienes, one or more (meth)acrylates one or more alkadienes, one or more methacrylates and one or more acrylates, or mixtures thereof; wherein the copolymer of the latex contains one or more unsaturated carboxylic acids; the one or more unsaturated carboxylic acids are acrylic acid, methacrylic acid, itaconic acid, fumaric or maleic acid, or mixtures thereof; the composition comprises: a) from about 35 to about 60 percent by weight of a the co-polymer containing the residue of one or more monomers selected from one or more ethylenically unsaturated aromatic monomers, one or more alkadienes, and one or more (meth) acrylates; and b) from about 35 to about 60 percent of the polyolefin composition containing one or more polyolefins; the copolymer of the latex contains a hydroxyl alkyl acrylate; the composition comprises: a) from about 45 to about 55 percent by weight of the co-polymer containing the residue of one or more monomers selected from one or more ethylenically unsaturated aromatic monomers, one or more alkadienes, and one or more (meth) acrylates; and b) from about 45 to about 55 percent of the polyolefin composition comprising one or more polyolefins; the copolymer comprises styrene, butyl acrylate and one or more of acrylic acid and methacrylic acid; the copolymer comprises styrene, butyl acrylate, one or more of acrylic and methacrylic acid and a hydroxyl alkyl acrylate; the acid neutralizer comprises one or more volatile nitrogen containing compounds; the polyolefin composition includes one or more thioester antioxidants; the one or more polyolefins with maleic anhydride or a hydrolysis product thereof grafted to the backbone exhibits a weight average molecular weight of about 20,000 to about 40,000 daltons and contain about 0.5 to about 3.5 percent by weight of maleic anhydride or a hydrolysis product thereof; the polyolefin composition contains from about 5 to about 15 percent by weight of one or more polyolefins with maleic anhydride or a hydrolysis product thereof grafted to the backbone; the polyolefin composition comprises: from about 95.7 to about 99.96 percent by weight of one or more polyolefins; from about 0.01 to about 1.0 percent by weight of one or more hindered phenol antioxidants; from about 0.01 to about 0.1 percent by weight of one or more phosphite antioxidants; from about 0.01 to about 0.2 percent by weight of one or more thioester antioxidants; and from about 0.01 to about 3.0 percent by weight of one or more acid neutralizers; the polyolefin composition contains one or more secondary neutralizers selected from alkaline metal hydroxides, alkali metal hydroxides, alkali phosphates, ionomeric moieties, ion exchange compounds, metal carbonates, and hydrotalcite like compounds; the copolymer containing the residue of one or more monomers selected from one or more ethylenically unsaturated aromatic monomers, one or more alkadienes, and one or more (meth) acrylates comprises: from about 20 to about 80 percent by weight of one or more ethylenically unsaturated aromatic monomers; from about 20 to about 80 percent by weight of one or more (meth)acrylates or alkadienes; and, from about 0.5 to about 20 percent by weight of one or more unsaturated carboxylic acids; and the copolymer contains from about 1 to about 15 of one or more hydroxyl alkyl acrylates.

The methods disclosed may further comprise any one or more of the features described in this specification in any combination, including the preferences and examples listed in this specification, and includes the following features: a plurality of the bundles of fibers is passed through a die as they exit the dispersion to shape the plurality of bundles in the direction transverse to the orientation of the fibers and the polymeric matrix and bundles of fibers are bonded together in the formed shape in the oven; and after exiting the oven a thermoplastic composition is coated on the polymeric matrix disposed on the bundles, woven or nonwoven structures of fibers; the polymeric matrix and bundles, woven or nonwoven structures of fibers are then passed through a second oven to bond the thermoplastic matrix to the polymeric matrix; and the bundle woven or nonwoven structures of fibers is cut into the desired length.

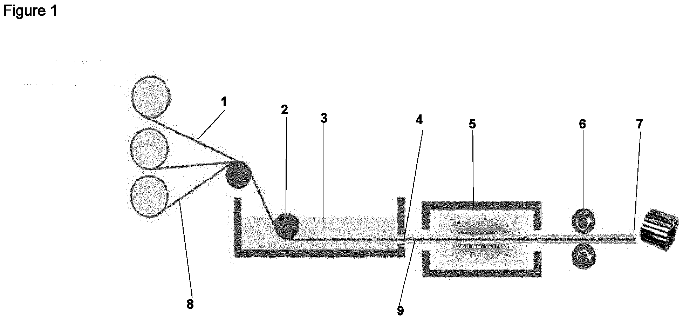

Figure 1 shows one embodiment of the process disclosed herein. Disclosed is a roving rack 1, a roving spreader 2, a bath 3 containing a water dispersion of polyolefins, a die 4 at the exit of the bath 3, an oven 5, a strand puller 6 and a pelletizer 7. Also shown are fiber bundles 8 being passed sequentially through the bath 3, to coat the fiber bundles 8 with a polymeric matrix 9, the die, a wet die, to shape the polymeric matrix 9 and fiber bundles 8 to the desired shape transverse to the direction of travel of the fiber bundles 9. The bundles of fibers 8 with the polymeric matrix 9 disposed thereabout are passed into and through an oven 5 to remove volatile ingredients and to sinter the polymeric matrix 9 about the fiber bundles 8. A strand puller 6 is located after the oven 5 which pulls the bundles of fibers 8 through the process. The bundle of fibers 8 with the polymeric matrix 9 thereabout is then passed through a pelletizer to cut the polymeric matrix 9 and bundles of fibers 8 into the desired length in the direction of travel of the bundles of fibers 8.

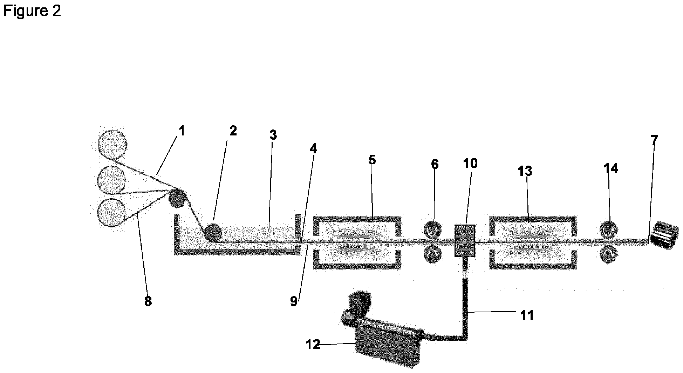

Figure 2 shows a second embodiment of the process. In this embodiment the process is essentially the same through the strand puller 6. Thereafter the polymeric matrix 9 and bundles of fibers 8 are passed through a wire coater 10 connected by line 11 to an extruder 12 that feeds the wire coater 10 with a polyolefin in the molten state. The molten polyolefin is coated about polymeric matrix 9 and bundles of fibers 8 in the wire coater 10. Thereafter the polyolefin coated polymeric matrix 9 and bundles of fibers 8 are passed into a second oven 13 to sinter the polyolefin coating about the polymeric matrix 9 and bundles of fibers 8. The coated polymeric matrix 9 and bundles of fibers 8 are pulled through a second strand puller 14 and cut in the strand pelletizer 7.

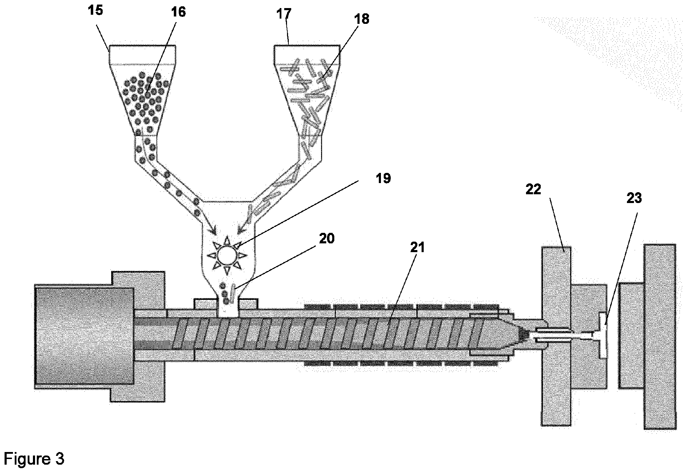

Figure 3 shows a feeder 15 containing natural polyolefin pellets 16 (not containing fibers) and a second feeder 17 with pellets of a polyolefin polymer matrix containing bundles of fibers 18 into a mixer 19. The pellets 16 and 18 are mixed in the mixer 19 and fed by a line 20 into an extruder 21 wherein the pellets 16 and 18 are blended under shear to form a homogeneous mixture of polyolefins having a relatively uniform distribution of fibers throughout. The mixture is extruded from the extruder and either pelletized or introduced into a molding apparatus, 22 having a mold 23 to form the mixture into a desired shape.

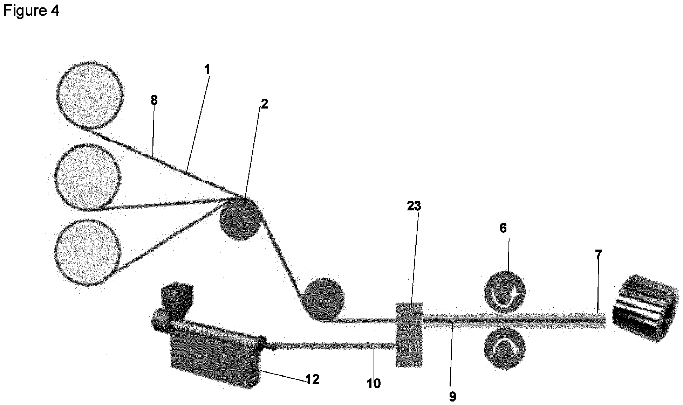

Figure 4 illustrates a traditional process for coating fibers with a thermoplastic material. Rovings of fibers 8 are passed through a roving rack 1 and a roving spreader 2 and through a molten bath of thermoplastic resin 23, which is connected by a line 10 to an extruder 12. The fibers 8 with the resin coated thereon 9 is pulled through a strand puller 6 and cut in a pelletizer 7.

## Illustrative Embodiments of the Invention

The following examples are provided to illustrate the invention, but are not intended to limit the scope thereof. All parts and percentages are by weight unless otherwise indicated.

Ingredients

A Polyolefin Dispersion which 50 weight percent polymeric solids in water and has a particle size of 1 to 10 microns is prepared using about 50 percent by weight of the solids mixture listed in Table 1 and 50 percent by weight of deionized water.

Table 1

| Components | Percent by weight of solids |
|---|---|
| polypropylene ethylene copolymer having a 44 MFR | |
| low density polyethylene EAA copolymer | |
| maleic anhydride grafted polypropylene wax 1 | |
| maleic anhydride grafted polypropylene 5000 MW | |
| polypropylene ethylene copolymer having a 44 MFR and 3 mole percent ethylene content | |
| homopolymer of polypropylene having a 950 MFR | |
| polypropylene ethylene copolymer prepared using metallocene catalysts containing 16 mole present of ethylene | |
| Carbon black | |
| tris(2,4-ditert-butylphenyl)phosphite | |
| pentaerythritol tetrakis(3(3,5-di-tert-butyl-4-hydroxyphenyl)propionate | |
| octadecyl-3-(3,5-di-tert- butyl-4-hydroxyphenyl)-propionate | |
| didodecyl-3,3'-thiodipropionate | |
| Dimethyl ethanol amine | |
| Hydrotalcite | |

Latex compositions

a number of lattices are used all of which are prepared using a seed latex of 22.4 nm with a target latex particle size of 130 nm. The monomers used to prepare the copolymer lattices and the measured properties of the lattices are illustrated in Table 2.

Table 2

| Latex/Monomer | 1 Wt % | 2 Wt% | 3 Wt % | 4 Wt % | 5 Wt% | 6 Wt % |
|---|---|---|---|---|---|---|
| Styrene | | 60.5 | 72.5 | 45 | 46.5 | 42.5 |
| Butyl Acrylate | 19 | 35 | 23 | 50.5 | 50.5 | 50.5 |
| Vinyl acetate | 80 | | | | | |
| Methyl Methacrylate | | | | | | |
| Methacrylic acid | 0.5 | 2.5 | 2.5 | 2.5 | | 2.5 |
| Acrylic acid | | 2 | 2 | 2 | 2 | 2 |
| Maleic acid | | | | | 1 | |
| 2-hydroxy ethyl acrylate | | | | | | 2.5 |
| Diallyl maleate | 0.15 | | | | | |
| Measured properties | | | | | | |
| Particle Size nm | 243 | 128 | 128 | 127 | 140 | 131 |
| Glass Transition °C | 28 | 50 | 72 | 18 | 20 | 17 |
| Gel % | 78 | 69 | 79 | 0 | 77 | 77 |

Diallyl maleate is used as a crosslinker. Lattices 2 to 6 use NaOH in AMX to control the pH during polymerization and ammonium persulfate as an initiator. The pH is increased to around 6 with ammonium hydroxide after reaction.
Fiber bundles -fiber bundles with a sizing applied to the surface of the fibers wherein the bundles have a Tex of 2400 and fiber diameter of 13 microns.

Process description

Lattices 1 to 6 are blended with the polyolefin dispersion (POD) at varying percentage levels using a high sheer mixer.
Baths of the latex and POD mixtures are prepared and fiber bundles as described previously are passed through the baths. The first process step comprises guiding the sized fiber bundles or rovings into one or more wetting baths for coating with the low viscosity, about 150 mPa.s, water based polymer and additive mixture. The rovings with wet polymer and additive mixture coated onto them is guided into an oven, where the water is dried off in hot air (up to 350°C inlet) that also sinters/melts the polymer matrix coated about the glass fibers. After this step a continuous glass strand/wire is formed and cooled and has depending on the process conditions about 10 to about 30 percent by weight of non glass components. In a following step the continuous coated strand can be cut to specific size, typically 6 to 14 mm. Alternatively to cutting a shaping, or post treatment can be applied such as a secondary coating or cable extrusion step followed by a shaping or cutting step.
The formed pellets are tested for a variety of properties. The compositions tested and the properties are compiled in Table 2. Creep is measured according to ASTM D2990.
The mixer test comprises the agitation of coated glass bundle granules inside a coffee grinder that will beat around the granules at high speed in a small 100 ml size aluminum bowl. If the granule is not robust enough the glass fibers from inside the granule will be swirled out of the granules and create fluff and volume increase (in ml) of the material that is in the bowl. An increase in volume illustrates this effect. If the volume increase is low (<20ml delta) the granules are considered robust. The Ash test involves taking a known amount of sample, placing the weighed sample into a dried / preweighed porcelain crucible, burning away the polymer in an air atmosphere at temperatures above 500°C, and weighing the crucible after it is has been cooled to room temperature in a desiccator. The ash test is performed according to test ASTM D2584, D5630 or ISO 3451.
The Unnotched Charpy is performed according to test ASTM D256. TsY is tensile strength at yield and performed

EP 3 363 858 A1

according to test ISO 527-1, ISO 527-2. Elongation, tensile modulus and TY/TR are determined according to test procedure ISO 527-2. Opacity is determined according to the following test procedure. Prepare 10 plaques of 80 x 80 x 1 mm. The sample thickness may be varied to use other sample thicknesses, but a deviation more than 0.1 mm from aim 1 mm thickness are reported with the test result. Place the central part of a plaque in the test device, such as Densitometer McBeth TD901 lower the measurement head to the down position, press onto the test plaque. Note the test result. Apply this procedure for 10 plaques and report the average optical density to 1 decimal accurate.

Clusters are is determined according to the following test procedure. The process is performed using a light box 75 x 55 x 10 cm equipped with a transparent, but light diffusing top layer and 3 fluorescent tubes each having 18 Watt electrical power and 840 type cool white light color providing diffused light with an even distribution of light intensity on the transparent surface of the device. Reference samples are used which are 30 wt% GF pellets of concentrate diluted in neat polypropylene.

| Glass concentrate | | 60 % | 81 % | 82 % | 83 % | 84 % | 85 % | 86.5 % | 88 % |
|---|---|---|---|---|---|---|---|---|---|
| Neat PP | | L | L | L | L | L | L | L | L |
| Reference | | | | | | | | | |
| number | | 1 | 2 | 3 | 4 | 5 | 6 | 7 | 8 |

1. Prepare plaques ten representative plaques of 80 x 80 x 1 mm and divide in two groups of five plaques. Place sample plaques on the light box. Compare sample plaques to reference sample numbers 1-2-3-4-5. Determine to which reference sample the group of 5 test sample comes closest in terms of visual amount of clusters. Note that reference number. This might be one reference, or in between two adjacent references Repeat from step 5 for the second group of five sample plaques. Report average of both determined reference numbers, e.g.: If first group of five test samples is ranked between references 2 and 3 and second group of five test samples is ranked closest to reference 3 then report as follows : first group 2,5 second group 3 = 2,75 cluster average.

Table 2 Coated fiber compositions and their properties

| Latex | Latex/Pod | Oven T | GF% | Blen Test % 0 sec | Blen Test % 10 sec | TY/ TR | % E | T mod | Clusters | Opacity | Charpy U | Charpy N |
|---|---|---|---|---|---|---|---|---|---|---|---|---|
| Units | % | °C | | ml | ml | | % | | | | | |
| Target | | | | | | | | 7900 | | | | |
| 1 | 65/30 | 230 | 83.8 | | | 99.2 | 1.7 | 7780 | D DL | 4.4 | 38.5 | 22.1 |
| 1 | 65/30 | 210 | 83.3 | | | 95.2 | 1.8 | 7280 | L LH | 4.2 | 36.1 | 22.0 |
| 1 | 65/30 | 250 | 84.8 | | | 83.1 | 1.8 | 6395 | LH LH | 4.2 | 33.2 | 24.6 |
| 1 | 45/50 | 230 | 85.3 | 31 | >100 | 101.4 | 1.9 | 7255 | D DL | 4.5 | 38.5 | 20.9 |
| 1 | 45/50 | 210 | 85.5 | 33 | >100 | 100.4 | 1.9 | 7260 | D DL | 4.4 | 41.1 | 22.1 |
| 1 | 45/50 | 250 | 85.2 | 32 | >100 | 98.4 | 1.9 | 7100 | D DL | 4.3 | 37.9 | 21.6 |
| 2 | 85/10 | 230 | 81.0 | 35 | >100 | 71.1 | 1.5 | 6685 | HM HM | 3.2 | 34.6 | 30.5 |
| 2 | 85/10 | 250 | 80.6 | 35 | >100 | 73.6 | 1.4 | 7420 | MM | 3.2 | 35 | 30.8 |
| 2 | 65/30 | 230 | 82.0 | 35 | >100 | 93.3 | 1.7 | 7415 | DL LH | 3.4 | 37.6 | 24.5 |
| 2 | 45/50 | 230 | 82.0 | 30 | 42 | 99.7 | 2.0 | 7005 | OD D | 4.8 | 38.8 | 22.2 |
| 2 | 45/50 | 250 | 82.5 | 30 | 40 | 99.6 | 1.8 | 7505 | D DL | 4.5 | 37.4 | 21.1 |
| 3 | 85/10 | 230 | | 37 | >100 | 73.8 | 1.6 | 6710 | H H | 2.6 | 34.2 | 29 |
| 3 | 85/10 | 210 | | 35 | 90 | 73.1 | 1.5 | 7030 | LH H | 2.3 | 33.2 | 28.8 |
| 3 | 65/30 | 230 | | 40 | >100 | | | | DL L | 2.9 | 37.8 | 25.7 |
| 3 | 65/30 | 210 | | 40 | >100 | 104 | 1.9 | 7830 | DL L | 2.3 | 36.1 | 23.5 |
| 3 | 65/30 | 250 | | 47 | >100 | 98.4 | 1.7 | 7770 | D DL H | 2.3 | 38.1 | 25.4 |
| 3 | 45/50 | 230 | | 32 | 57 | 103.9 | 1.8 | 7920 | O OD | 5.0 | 36.4 | 23.9 |
| 3 | 45/50 | 210 | | 32 | 52 | 105.8 | 1.8 | 8020 | D O | 4.6 | 35.8 | 23.9 |
| 3 | 45/50 | 250 | | 32 | 59 | 101.1 | 1.9 | 7485 | D D | 4.5 | 37 | 24.6 |
| 3 | 45/50 | 210 | 84.8 | | | 100.54 | 1.9 | 7320 | LH H | 4.7 | 40.3 | 28.7 |
| 3 | 45/50 | 210 | 85.2 | | | 99.2 | 2.0 | 7090 | L L | 4.6 | 40.2 | 26.1 |
| 3 | 45/50 | 210 | 85.1 | | | 96.4 | 1.9 | 6915 | L L | 4.5 | 41.2 | 25.8 |
| 3 | 45/50 | 210 | 84.7 | | | 94.3 | 1.9 | 6940 | LH H | 4.4 | 38.9 | 26.4 |

(continued)

| Latex | Latex/Pod | Oven T | GF% | Blen Test % 0 sec | Blen Test % 10 sec | TY/TR | % E | T mod | Clusters | Opacity | Charpy U | Charpy N |
|---|---|---|---|---|---|---|---|---|---|---|---|---|
| Units | % | °C | | ml | ml | | % | | | | | |
| Target | | | | | | | | 7900 | | | | |
| 3 | 45/50 | 210 | 85.0 | | | 94.3 | 2.0 | 6705 | LH H | 4.9 | 38.6 | 24.5 |
| 4 | 45/50 | 230 | 84.5 | 32 | 50 | 106.7 | 2.0 | 7543 | O OD | 4.4 | 41.6 | 22.82 |
| 4 | 45/50 | 210 | | 30 | 65 | 104.2 | 2.0 | 7450 | O OD | 3.8 | 39.02 | 22.80 |
| 4 | 45/50 | 250 | | 32 | 65 | 99.4 | 1.8 | 7500 | O D | 4.0 | 39.31 | 24.39 |
| 5 | 45/50 | 230 | | 30 | 38 | 98.4 | 2.0 | 7090 | O OD | 4.8 | 38.47 | 22.83 |
| 5 | 45/50 | 210 | 84.1 | 30 | 42 | 94.5 | 1.8 | 7280 | D DL | 4.5 | 35.88 | 21.13 |
| 5 | 45/50 | 250 | | 30 | 46 | 96.8 | 1.7 | 7854 | O OD | 4.1 | 37.44 | 23.10 |
| 6 | 65/30 | 230 | 81.5 | 30 | 40 | 79.3 | 1.8 | 6010 | HM M | 4.1 | 32.4 | 23.96 |
| 6 | 65/30 | 210 | 83.3 | 31 | 55 | 76.3 | 1.6 | 6250 | M M | 4.0 | 32.6 | 21.9 |
| 6 | 65/30 | 250 | 82.1 | 30 | 45 | 80.8 | 1.8 | 6155 | UH H | 4.1 | 32.9 | 25.7 |
| 6 | 45/50 | 230 | 84.4 | 29 | 35 | 90.4 | 1.9 | 6485 | D DL | 4.1 | 37 | 22.7 |
| 6 | 45/50 | 210 | 85.6 | 29 | 43 | 99.5 | 2.0 | 6890 | DL L | 3.9 | 40.3 | 22.3 |
| 6 | 45/50 | 250 | 87.7 | 28 | 45 | 95.2 | 1.9 | 6900 | D L | 3.8 | 35.8 | 24.6 |

In Table 2 GF means Glass Fibers and the percentage is based on the amount in the recovered concentrate; Blen means Blender; TY is tensile yield; TR is tensile rupture stress; TY/TR is measured at 1.5 or 4mm; E is elongation; Clusters and Opacity are measured at 150 bar using a 2 x5 inch plaque; Charpy U is Charpy Unnotched; and Charpy N is Charpy notched. About 5 percent of the compositions tested comprise additives. With respect to clusters the following table explains the ratings:

| Cluster Rating | One rating consists of an average of 5 plaques by visual observation. | |
| --- | --- | --- |
| O | 30% GF | Zero: No clusters |
| D | 30% GF | DLGF: 60% concentrate reference level |
| L | 30% GF | Low: Somewhat higher than 60% concentrate reference |
| H | 30% GF | High: Significantly higher than 60% concentrate reference |
| M | 30% GF | Many: far exceeding 60% concentrate reference |

Note that the in betweens like DL are in between the two ratings.
Typical dilute polymer is a 44 copo PP, the higher the flow of the PP the worse the cluster ratings get (lower amount of shear on the granules).
In Table 2 the Tensile modulus, elongation and TY/TR are determined using 4 mm samples.
Parts by weight as used herein refers to 100 parts by weight of the composition specifically referred to. Any numerical values recited in the above application include all values from the lower value to the upper value in increments of one unit provided that there is a separation of at least 2 units between any lower value and any higher value. As an example, if it is stated that the amount of a component or a value of a process variable such as, for example, temperature, pressure, time and the like is, for example, from 1 to 90, preferably from 20 to 80, more preferably from 30 to 70, it is intended that values such as 15 to 85, 22 to 68, 43 to 51, 30 to 32 etc. are expressly enumerated in this specification. For values which are less than one, one unit is considered to be 0.0001, 0.001, 0.01 or 0.1 as appropriate. These are only examples of what is specifically intended and all possible combinations of numerical values between the lowest value, and the highest value enumerated are to be considered to be expressly stated in this application in a similar manner. Unless otherwise stated, all ranges include both endpoints and all numbers between the endpoints. The use of "about" or "approximately" in connection with a range applies to both ends of the range. Thus, "about 20 to 30" is intended to cover "about 20 to about 30", inclusive of at least the specified endpoints. The term "consisting essentially of" to describe a combination shall include the elements, ingredients, components or steps identified, and such other elements ingredients, components or steps that do not materially affect the basic and novel characteristics of the combination. The use of the terms "comprising" or "including" to describe combinations of elements, ingredients, components or steps herein also contemplates embodiments that consist essentially of the elements, ingredients, components or steps. Plural elements, ingredients, components or steps can be provided by a single integrated element, ingredient, component or step. Alternatively, a single integrated element, ingredient, component or step might be divided into separate plural elements, ingredients, components or steps. The disclosure of "a" or "one" to describe an element, ingredient, component or step is not intended to foreclose additional elements, ingredients, components or steps.

**Claims**

1.  A composition comprising:

     a) from about 25 to about 75 percent by weight of a latex containing a co-polymer containing the residue of one or more monomers of one or more ethylenically unsaturated aromatic monomers, one or more alkadienes, and one or more (meth) acrylates wherein the polymer particles in the latex have a particle size in the nanometer range; and
     b) from about 25 to about 75 percent of a polyolefin dispersion containing one or more polyolefins wherein the polymer particles in the dispersion have a particle size in the micron range.

2.  A composition according to Claim 1 wherein the polyolefin dispersion comprises a dispersant and one or more polyolefins, one or more hindered phenol antioxidants, one or more phosphite antioxidants and one or more acid neutralizers

3. A composition according to Claim 1 or 2 wherein the polymer particles in the latex have a particle size of about 20 nanometers to about 700 nanometers; and the polymer particles in the dispersion have a particle size of about 100 nanometers to about 500 microns.

4. A composition according to any one of the preceding claims wherein the latex is based on a copolymer of one or more ethylenically unsaturated aromatic monomers and one or more (meth)acrylates, one or more ethylenically unsaturated aromatic monomers and one or more alkadienes, one or more methylmethacrylates and one or more alkadienes, or one or more alkyl methacrylates and one or more acrylates; or mixtures thereof.

5. A composition according to any one of the preceding claims wherein the copolymer of the latex contains one or more unsaturated carboxylic acids.

6. A composition according to any one of the preceding claims wherein the copolymer of the latex contains a hydroxyl alkyl acrylate.

7. A composition according to any one of the preceding claims which comprises:

a) from about 35 to about 60 percent by weight of the latex containing a co-polymer containing the residue of one or more one or more ethylenically unsaturated aromatic monomers, one or more alkadienes, and one or more (meth) acrylates; and
b) from about 35 to about 60 percent of the polyolefin dispersion containing one or more polyolefins.

8. A composition according to any one of claims 1 to 7 wherein the polymeric particles of the polyolefin dispersion comprises:

from about 95.7 to about 99.96 percent by weight of one or more polyolefins;
from about 0.01 to about 1.0 percent by weight of one or more hindered phenol antioxidants;
from about 0.01 to about 0.1 percent by weight of one or more phosphite antioxidants;
from about 0.01 to about 0.2 percent by weight of one or more thioester antioxidants; and
from about 0.01 to about 3.0 percent by weight of one or more acid neutralizers.

9. A composition according to any one of the preceding claims wherein the copolymer in the latex comprises:

from about 20 to about 80 percent by weight of one or more ethylenically unsaturated aromatic monomers;
from about 20 to about 80 percent by weight of one or more of one or more (meth)acrylates and one or more alkadienes; and,
from about 0.5 to about 20 percent by weight of one or more unsaturated carboxylic acids.

10. A composition according to Claim 9 wherein wherein the copolymer in the latex contains from about 1 to about 15 of one or more hydroxyl alkyl acrylates.

11. A composition comprising:

a polymeric matrix derived from a compositon according to nay one of Claims 1 to 10; bundles, woven structures or non-woven structures of fibers;
wherein the one or more bundles, woven structures or non-woven structures of fibers have the polymeric matrix coated on about 90 percent of the surface area of the fibers in the one or more bundles, woven structures or non-woven structures.

12. A composition according to Claim 11 wherein the one or more bundles, woven structures or nonwoven structures of fibers having a polymeric matrix coated on the fibers have coated about the structures a thermoplastic composition.

13. A method comprising

a) passing one or more bundles, woven or nonwoven structures of fibers through a bath comprising a composition according to any one of Claims 1 to 10 so as to form a coat the fibers with the polymeric matrix wherein 90 percent of the suface area of the fibers are coated with the polymeric matrix;

b) passing the polymeric matrix and bundles of woven or nonwoven structures of fibers through an oven to volatilize away the volatile components of the bath; and

c) cutting the polymeric matrix and the bundles, woven or nonwoven structures of fibers into a desired length.

14. A method according to Claim 13 wherein a plurality of the bundles of fibers is passed through a die as they exit the dispersion to shape the plurality of bundles in the direction transverse to the orientation of the fibers and the polymeric matrix and bundles of fibers are bonded together in the formed shape in the oven.

15. A method according Claim 13 wherein after exiting the oven a thermoplastic composition is coated on the polymeric matrix disposed on the bundles, woven or nonwoven structures of fibers; the polymeric matrix and bundles, woven or nonwoven structures of fibers are then passed through a second oven to bond the thermoplastic matrix to the polymeric matrix; and the bundle woven or nonwoven structures of fibers is cut into the desired length.

Figure 1

Figure 2

Figure 3

Figure 4

Europäisches Patentamt

European Patent Office

Office européen des brevets

# EUROPEAN SEARCH REPORT

**Application Number**

EP 17 15 6970

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/015894 A1 (SISLER GORDON [CA] ET AL) 16 January 2014 (2014-01-16) * the whole document * | 1-10 | INV. C08L23/04 |

TECHNICAL FIELDS SEARCHED (IPC)

C08L

The present search report has been drawn up for all claims

| Place of search | Date of completion of the search | Examiner |
|---|---|---|
| Munich | 3 April 2017 | Rouault, Yannick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 17 15 6970

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2017

| Patent document cited in search report | Publication date | Patent family member(s) | Publication date |
|---|---|---|---|
| US 2014015894 A1 | 16-01-2014 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6818698 B
- US 5437928 A
- US 5891284 A
- US 5972166 A
- US 2008118728 A
- US 7803865 B
- US 4478974 A
- US 4751111 A
- US 4968740 A
- US 3563946 A
- US 3575913 A
- DE 1905256
- US 8003716 B
- US 8637160 B
- US 20130066011 A
- WO 2011079011 A
- US 3645992 A
- US 4076698 A, Anderson
- US 5272236 A
- US 5278272 A
- US 8916640 B
- US 4762890 A
- US 4927888 A
- US 4950541 A
- US 4599392 A
- US 4988781 A
- US 5938437 A

**Non-patent literature cited in the description**

- **GREG SAUNDERS ; BEN MACCREATH.** Analysis of Polyolefins by GPC/;SEC Application Compendium. Agilent Technologies, Inc, 2011